# EUROPEAN PATENT SPECIFICATION

(11) **EP 2 853 092 B1**
(45) Date of publication and mention of the grant of the patent: **17.02.2021**
(21) Application number: 13813160.2
(22) Date of filing: 01.07.2013
(51) Int. Cl.: H04N 19/70, H04N 19/44, H04N 19/187, H04N 19/146, H04N 19/31, H04N 19/597, H04N 19/169

(54) **VIDEO SYNTAX FOR A HYPOTHETICAL REFERENCE DECODER (HRD)**
VIDEO SYNTAX FÜR EINEN HYPOTHETISCHEN REFERENZ DEKODIERER (HRD)
SYNTAX VIDÉO POUR UN DÉCODEUR DE RÉFÉRENCE HYPOTHÉTIQUE

(30) Priority: 02.07.2012 US 201261667286 P; 30.07.2012 US 201261677324 P; 01.02.2013 US 201313757679
(43) Date of publication of application: 01.04.2015
(73) Proprietor: Sony Corporation, Tokyo 108-0075 (JP)
(72) Inventor: HAQUE, Munsi, San Jose, California 95138 (US); SATO, Kazushi, Tokyo 108-0075 (JP); SUZUKI, Teruhiko, Tokyo 108-0075 (JP); TABATABAI, Ali, Cupertino, California 95014 (US)
(74) Representative: D Young & Co LLP
(86) International application number: PCT/US2013/048902
(87) International publication number: WO 2014/008175

(56) References cited:
- US-A1- 2004 005 007
- US-A1- 2004 190 606
- US-A1- 2010 091 837
- US-A1- 2011 038 424
- US-A1- 2011 043 701
- BROSS B ET AL: "High Efficiency Video Coding (HEVC) text specification draft 7", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-I1003, 10 May 2012 (2012-05-10), XP030112373,
- HAQUE M ET AL: "Extension of HEVC VUI Syntax Structure", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-I0263, 17 April 2012 (2012-04-17), XP030112026,
- JVT: "HRD/VBV Output Document", 4. JVT MEETING; 61. MPEG MEETING; 22-07-2002 - 26-07-2002; KLAGENFURT,AT; (JOINT VIDEO TEAM OF ISO/IEC JTC1/SC29/WG11 AND ITU-T SG.16 ),, no. JVT-D146, 26 July 2002 (2002-07-26), XP030005413, ISSN: 0000-0439
- NARASIMHAN S: "Correction re low_delay_hrd_flag in VUI", 20. JVT MEETING; 77. MPEG MEETING; 15-07-2006 - 21-07-2006;KLAGENFURT, AT; (JOINT VIDEO TEAM OF ISO/IEC JTC1/SC29/WG11 AND ITU-TSG.16 ),, no. JVT-T033, 21 July 2006 (2006-07-21), XP030006520, ISSN: 0000-0224
- HAQUE M ET AL: "On VUI syntax parameters", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F289, 2 July 2011 (2011-07-02), XP030009312,

## Description

### TECHNICAL FIELD

The present invention relates generally to video systems, and more particularly to a system for video coding with temporal scalability.

### BACKGROUND ART

The deployment of high quality video to smart phones, high definition televisions, automotive information systems, and other video devices with screens has grown tremendously in recent years. The wide variety of information devices supporting video content requires multiple types of video content to be provided to devices with different size, quality, and connectivity capabilities.

Video has evolved from two dimensional single view video to multiview video with high-resolution three dimensional imagery. In order to make the transfer of video more efficient, different video coding and compression schemes have tried to get the best picture from the least amount of data. The Moving Pictures Experts Group (MPEG) developed standards to allow good video quality based on a standardized data sequence and algorithm. The H.264 (MPEG4 Part 10) / Advanced Video Coding design was an improvement in coding efficiency typically by a factor of two over the prior MPEG-2 format. The quality of the video is dependent upon the manipulation and compression of the data in the video. The video can be modified to accommodate the varying bandwidths used to send the video to the display devices with different resolutions and feature sets. However, distributing larger, higher quality video, or more complex video functionality requires additional bandwidth and improved video compression.

Thus, a need still remains for a video coding system that can deliver good picture quality and features across a wide range of device with different sizes, resolutions, and connectivity. In view of the increasing demand for providing video on the growing spectrum of intelligent devices, it is increasingly critical that answers be found to these problems. In view of the ever-increasing commercial competitive pressures, along with growing consumer expectations and the diminishing opportunities for meaningful product differentiation in the marketplace, it is critical that answers be found for these problems. Additionally, the need to save costs, improve efficiencies and performance, and meet competitive pressures, adds an even greater urgency to the critical necessity for finding answers to these problems.

Solutions to these problems have long been sought but prior developments have not taught or suggested any solutions and, thus, solutions to these problems have long eluded those skilled in the art.

Previously proposed arrangements are disclosed in US 2004/005007 A1; US 2010/091837 A1; US 2011/038424 A1; US 2011/043701 A1; US 2004/190606 A1; JVT: "HRD/VBV Output Document" (4. JVT Meeting 61. MPEG Meeting July 2002, JVT-D146); Narasimhan "Correction re low_delay_hrd_flag in VUI", 20. JVT Meeting 77. MPEG Meeting July 2006. JVT-T033); and Haque et al "On VUI Syntax Parameters" 6. JCT-VC Meeting 97. MPEG Meeting July 2011 JCTVC-F289). Further documents are listed below.

### DISCLOSURE OF THE INVENTION

The present invention provides a method according to claim 1.

The present invention provides an apparatus according to claim 2.

The invention is defined by the appended claims. Any references to embodiments that do not fall under the scope of the claims are to be understood as examples useful for understanding the invention.

### BRIEF DESCRIPTION OF THE DRAWINGS

FIG. 1 is a block diagram of a video coding system in an embodiment of the present invention.
FIG. 2 is an example of the video bitstream.
FIG. 3 is an example of a HEVC VUI scalable extension syntax.
FIG. 4 is an example of a HRD syntax.
FIG. 5 is an example of a HRD fixed syntax.
FIG. 6 is an example of a HRD variable syntax.
FIG. 7 is an example of a HEVC VUI first extension syntax.
FIG. 8 is an example of a HEVC VUI second extension syntax.
FIG. 9 is an example of a HRD base syntax.
FIG. 10 is an example of a HRD sub-layer syntax.
FIG. 11 is an example of a HRD VUI syntax.
FIG. 12 is a functional block diagram of the video coding system.
FIG. 13 is a control flow of the video coding system.
FIG. 14 is a flow chart of a method of operation of the video coding system in a further embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that process or mechanical changes may be made without departing from the scope of the present invention.

In the following description, numerous specific details are given to provide a thorough understanding of the invention. However, it will be apparent that the invention may be practiced without these specific details. In order to avoid obscuring the present invention, some well-known circuits, system configurations, and process steps are not disclosed in detail.

Likewise, the drawings showing embodiments of the system are semi-diagrammatic and not to scale and, particularly, some of the dimensions are for the clarity of presentation and are shown greatly exaggerated in the drawing FIGs. Where multiple embodiments are disclosed and described, having some features in common, for clarity and ease of illustration, description, and comprehension thereof, similar and like features one to another will ordinarily be described with like reference numerals.

The term "syntax" means the set of elements describing a data structure. The term "module" referred to herein can include software, hardware, or a combination thereof in the present invention in accordance with the context used.

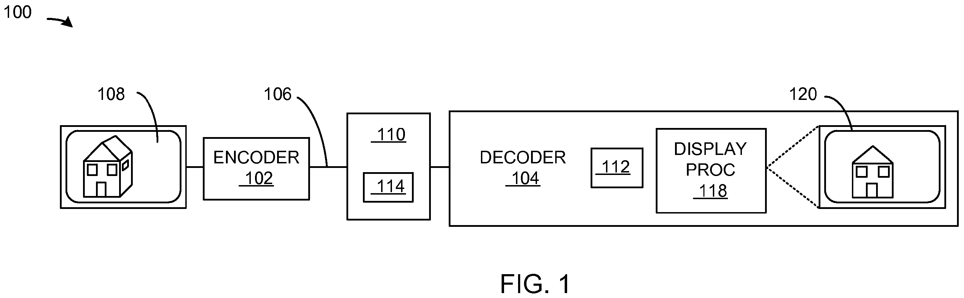

Referring now to FIG. 1, therein is shown a block diagram of a video coding system 100 in an embodiment of the present invention. A video encoder 102 can receive a video content 108 and send a video bitstream 110 to a video decoder 104 for decoding and display on a display interface 120.

The video encoder 102 can receive and encode the video content 108. The video encoder 102 is a unit for encoding the video content 108 into a different form. The video content 108 is defined as a digital representation of a scene of objects. For example, the video content 108 can be the digital output of one or more digital video cameras.

Encoding is defined as computationally modifying the video content 108 to a different form. For example, encoding can compress the video content 108 into the video bitstream 110 to reduce the amount of data needed to transmit the video bitstream 110.

In another example, the video content 108 can be encoded by being compressed, visually enhanced, separated into one or more views, changed in resolution, changed in aspect ratio, or a combination thereof. In another illustrative example, the video content 108 can be encoded according to the High-Efficiency Video Coding (HEVC)/H.265 draft standard.

The video encoder 102 can encode the video content 108 to form the video bitstream 110. The video bitstream 110 is defined a sequence of bits representing information associated with the video content 108. For example, the video bitstream 110 can be a bit sequence representing a compression of the video content 108. In another example, the video bitstream 110 is a series of bits representing the video content 108 that is transmitted serially over time.

The video encoder 102 can receive the video content 108 for a scene in a variety of ways. For example, the video content 108 representing objects in the real-world can be captured with a video camera, multiple cameras, generated with a computer, provided as a file, or a combination thereof.

The video content 108 can include a variety of video features. For example, the video content 108 can include single view video, multiview video, stereoscopic video, or a combination thereof. In a further example, the video content 108 can be multiview video of four or more cameras for supporting three-dimensional (3D) video viewing without 3D glasses.

The video encoder 102 can encode the video content 108 using a video syntax 114 to generate the video bitstream 110. The video syntax 114 is defined as a set of information elements that describe a coding methodology for encoding and decoding the video content 108. The video bitstream 110 is compliant with the video syntax 114, such as the High-Efficiency Video Coding/H.265 standard, and can include a HEVC video bitstream, an Ultra High Definition video bitstream, or a combination thereof. The video bitstream 110 can include the video syntax 114.

The video bitstream 110 can include information representing the imagery of the video content 108 and the associated control information related to the encoding of the video content 108. For example, the video bitstream 110 can include an occurrence of the video syntax 114 and an occurrence of the video content 108.

The video coding system 100 can include the video decoder 104 for decoding the video bitstream 110. The video decoder 104 is defined as a unit for receiving the video bitstream 110 and modifying the video bitstream 110 to form a video stream 112.

The video decoder 104 can decode the video bitstream 110 to form the video stream 112 using the video syntax 114. Decoding is defined as computationally modifying the video bitstream 110 to form the video stream 112. For example, decoding can decompress the video bitstream 110 to form the video stream 112 formatted for displaying on the display the display interface 120.

The video stream 112 is defined as a computationally modified version of the video content 108. For example, the video stream 112 can include a modified occurrence of the video content 108 with different resolution. The video stream 112 can include cropped decoded pictures from the video content 108.

In a further example, the video stream 112 can have a different aspect ratio, a different frame rate, different stereoscopic views, different view order, or a combination thereof than the video content 108. The video stream 112 can have different visual properties including different color parameters, color planes, contrast, hue, or a combination thereof.

The video coding system 100 can include a display processor 118. The display processor 118 can receive the video stream 112 from the video decoder 104 for display on the display interface 120. The display interface 120 is a unit that can present a visual representation of the video stream 112.

For example, the display interface 120 can include a smart phone display, a digital projector, a DVD player display, or a combination thereof. Although the video coding system 100 shows the video decoder 104, the display processor 118, and the display interface 120 as individual units, it is understood that the video decoder 104 can include the display processor 118 and the display interface 120.

The video encoder 102 can send the video bitstream 110 to the video decoder 104 over a communication path 106. The communication path 106 can be a variety of networks suitable for data transfer.

In an illustrative example, the video coding system 100 can include coded picture buffers (not shown). The coded picture buffers can act as first-in first-out buffers containing access units, where each access unit can contain one frame of the video bitstream 110.

In another illustrative example, the video coding system 100 can include a hypothetical reference decoder (not shown). The hypothetical reference decoder can be a decoder model used to constrain the variability of the video bitstream 110.

For example, the communication path 106 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 106. Ethernet, digital subscriber line (DSL), fiber to the home (FTTH), and plain old telephone service (POTS) are examples of wired communication that can be included in the communication path 106.

The video coding system 100 can employ a variety of video coding syntax structures. For example, the video coding system 100 can encode and decode video information using the High Efficiency Video Coding / H.265 working draft version. The video coding syntaxes are described in the following documents that are incorporated by reference in their entirety:
B. Bross, W. Han, J Ohm, G. Sullivan, T. Wiegand, "High-Efficiency Video Coding (HEVC) text specification draft 8", JCTVC-J1003 d7, July 2012 (Stockholm).
B. Bross, W. Han, J. Ohm, G. Sullivan, T. Wiegand, "High Efficiency Video Coding (HEVC) text specification draft 7" JCTVC-I1003 d4, May 2012 (Geneva).
M. Haque, K. Sato, A. Tabatabai, T. Suzuki, "Simplification of HRD parameters for Temporal Scalability", JCTVC-J0272, July 2012 (Stockholm).
M. Haque, K. Sato, A. Tabatabai, T. Suzuki, "HEVC VUI Parameters with Extension Hooks", JCTVC-J0270, July 2012 (Stockholm).
M. Haque, A. Tabatabai, "Extension of HEVC VUI Syntax Structure", JCTVC-10263, May 2012.
M. Haque, "AHG10: VUI and HRD syntax designs agreed by the BoG on VPS and NUH", JCTVC-J0548r1, July 2012.

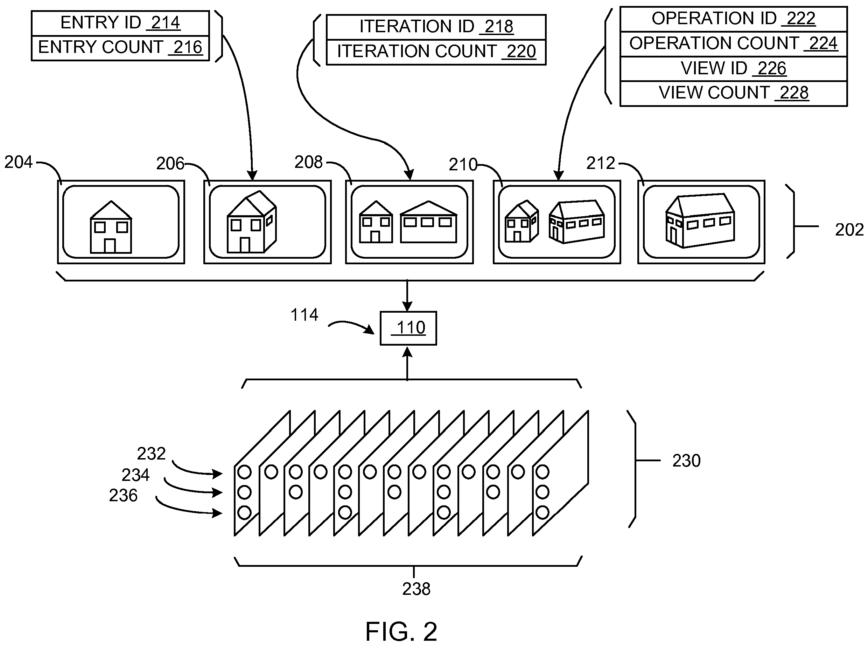

Referring now to FIG. 2, therein is shown an example of the video bitstream 110. The video bitstream 110 includes an encoded occurrence of the video content 108 of FIG. 1 and can be decoded using the video syntax 114 to form the video stream 112 of FIG. 1 for display on the display interface 120 of FIG. 1.

The video bitstream 110 can include a variety of video types as indicated by a syntax type 202. The syntax type 202 is defined as an indicator of the type of video coding used to encode and decode the video bitstream 110. For example, the video content 108 can include the syntax type 202 for advanced video coding 204 (AVC), scalable video coding 206 (SVC), multiview video coding 208 (MVC), multiview video plus depth 210 (MVD), and stereoscopic video 212 (SSV).

The advanced video coding 204 and the scalable video coding 206 can be used to encode single view based video to form the video bitstream 110. The single view-based video can include the video content 108 generate from a single camera.

The multiview video coding 208, the multiview video plus depth 210, and the stereoscopic video 212 can be used to encode the video content 108 having two or more views. For example, multiview video can include the video content 108 from multiple cameras.

The video syntax 114 can include an entry identifier 216. The entry identifier 216 is a value for differentiating between multiple coded video sequences. The coded video sequences can include occurrences of the video content 108 having a different bit-rate, frame-rate, resolution, or scalable layers for a single view video, multiview video, or stereoscopic video.

The video syntax 114 can include an entry count 214 for identifying the number of entries associated with each frame in the video content 108. The entry count 214 is the maximum number of entries represented in the video content 108.

The video syntax 114 can include an iteration identifier 218. The iteration identifier 218 is a value to differentiate between individual iterations of the video content 108.

The video syntax 114 can include an iteration count 220. The iteration count 220 is a value indicating the maximum number of iterations of the video content 108.

For scalable video coding, the term iteration count can be used to indicate the number of information entries tied to different scalable video layers in the case of scalable video coding. For multiview video coding, the iteration count can be used to indicate the number of operation points tied to the number of views of the video content 108.

For example, in scalable video coding, the video content 108 can be encoded to include a base layer with additional enhancement layers to form multi-layer occurrences of the video bitstream 110. The base layer can have the lowest resolution, frame-rate, or quality.

The enhancement layers can include gradual refinements with additional left-over information used to increase the quality of the video. The scalable video layer extension can include a new baseline standard of HEVC that can be extended to cover scalable video coding.

The video syntax 114 can include an operation identifier 222. The operation identifier 222 is a value to differentiate between individual operation points of the video content 108. The operation points are information entries present for multiview video coding, such as timing information, network abstraction layer (NAL) hypothetical referenced decoder (HRD) parameters, video coding layer (VCL) HRD parameters, a pic_struct_present_flag element, or a combination thereof.

The video syntax 114 can include an operation count 224. The operation count 224 is a value indicating the maximum number of operations of the video content 108.

The operation points are tied to generation of coded video sequences from various views, such as views generated by different cameras, for multiview and 3D video. For multiview video coding, an operation point is associated with a subset of the video bitstream 110 having a target output view and the other views dependent on the target output view.

The other views are dependent on the target output view if they are derived using a sub-bitstream extraction process. More than one operation point may be associated with the same subset of the video bitstream 110. For example, decoding an operation point refers to the decoding of the subset of the video bitstream corresponding to the operation point and subsequent output of the target output views as a portion of the video stream 112 for display on the device 102 of FIG. 1.

The video syntax 114 can include a view identifier 226. The view identifier 226 is a value to differentiate between individual views of the video content 108.

The video syntax 114 can include a view count 228. The view count 228 is a value indicating the maximum number of views of the video content 108.

For example, a single view can be a video generated by a single camera. Multiview video can be generated by multiple cameras situated at different positions and distances from the objects being viewed in a scene.

The video content 108 can include a variety of video properties. For example, the video content 108 can be high resolution video, such as Ultra High Definition video. The video content 108 can have a pixel resolution of 3840 x 2160 or higher, including resolutions of 7680 x 4320, 8K x 2K, 4K x 2K, or a combination thereof. Although the video content 108 supports high resolution video, it is understood that the video content 108 can also support lower resolutions, such as high definition (HD) video. The video syntax 114 can support the resolution of the video content 108.

The video content 108 can support a variety of frame rates including 15 frames per second (fps), 24 fps, 25 fps, 30 fps, 50 fps, 60 fps, and 120 fps. Although individual frame rates are described, it is understood that the video content 108 can support fixed and variable frame rates of zero frames per second and higher. The video syntax 114 can support the frame rate of the video content 108.

The video bitstream 110 can include one or more temporal layers 230. The temporal layers 230 are defined as portions of the video bitstream 110 representing the video stream 112 at a specified frame rate. Each of the temporal layers 230 can represent the video stream 112 at a different frame rate expressed as frames per second (fps). The temporal layers 230 can form a hierarchy with higher layers including the lower layers.

For example, a first occurrence 232 of the temporal layers 230 can represent a 15 fps occurrence of the video stream 112, a second occurrence 234 of the temporal layers 230 can represent a 30 fps occurrence of the video stream 112, and a third occurrence 236 of the temporal layers 230 can represent a 60 fps occurrence of the video stream 112. Each of the temporal layers 230 can include video frames 238 representing the video content 108.

The first occurrence 232 of the temporal layers 230 can represent a base layer that encodes the video content 108 to form the video stream 112 at 15 fps. The second occurrence 234 of the temporal layers 230 can represent the difference between the base layer, such as the first occurrence 232 of the temporal layers 230, and the video stream 112 of the video content 108 at 30 fps.

The second occurrence 234 can includes frames that represent the difference between the frames of the base layer and the new frames required for displaying the video content 108 at 30 fps. The third occurrence 236 of the temporal layers 230 can represent the difference between the second occurrence 234 of the temporal layers 230 and the video content at 60 fps.

In an illustrative example, the video decoder 104 of FIG. 1 for a smart phone can extract the second occurrence 234 of the temporal layers 230 at 30 fps from the video bitstream 110, which can include the information from the first occurrence 232 and the second occurrence 234. The information in the video bitstream 110 from the third occurrence 236 of the temporal layers 230 can be discarded to reduce the size of the video bitstream 110.

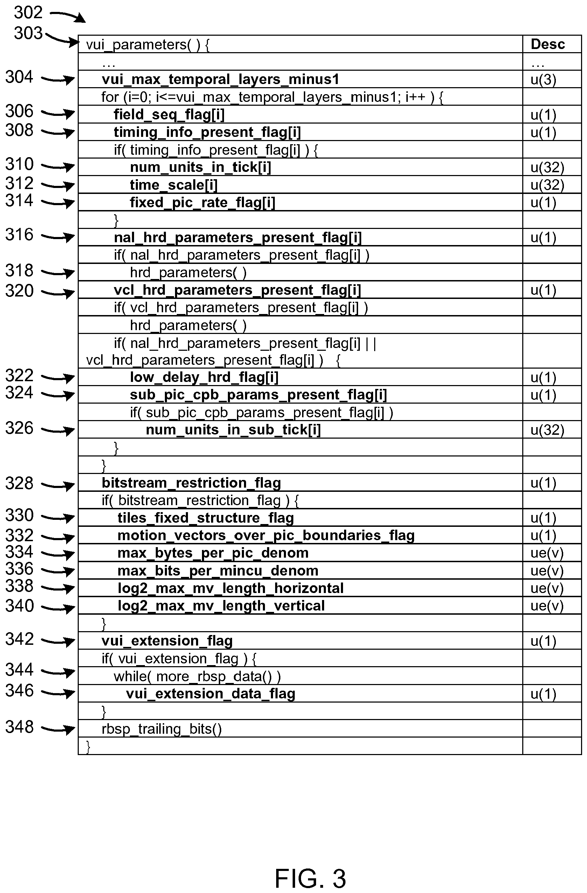

Referring now to FIG. 3, therein is shown an example of a HEVC VUI scalable extension syntax 302. The HEVC VUI scalable extension syntax 302 provides information for each occurrence of the temporal layers 230 of FIG. 2 in the video bitstream 110 of FIG. 1.

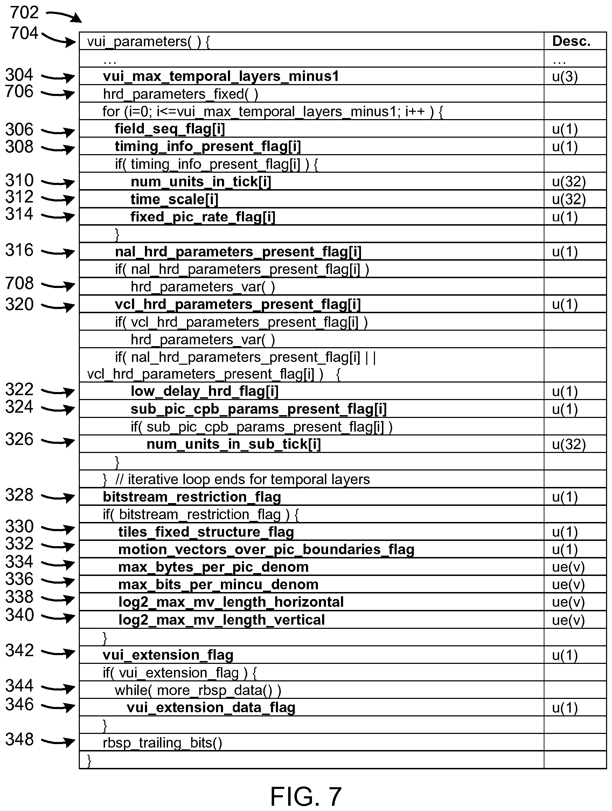

The HEVC VUI scalable extension syntax 302 describes the elements in the HEVC VUI scalable extension syntax table of FIG. 7. The elements of the HEVC VUI scalable extension syntax 302 are arranged in a hierarchical structure as described in the HEVC VUI scalable extension syntax table of FIG. 7. Terms such as first or second are used for identification purposes only and do not indicate any order, priority, importance, or precedence.

The HEVC VUI scalable extension syntax 302 includes a HEVC VUI scalable extension syntax header 303, such as the vui_parameters element. The HEVC VUI scalable extension syntax header 303 is a descriptor for identifying the HEVC VUI scalable extension syntax 302. The HEVC VUI scalable extension syntax 302 is used to encode and decode the video bitstream 110.

The HEVC VUI scalable extension syntax 302 can include a temporal layer count 304, such as vui_max_temporal_layers_minusl element, for identifying the number of the temporal layers 230 in the video bitstream 110 of FIG. 1. The temporal layer count 304 is the number of the temporal layers 230 minus 1 to map the temporal layer count 304 from 0 to the number of temporal layers minus 1.

The HEVC VUI scalable extension syntax 302 can include a field sequence flag 306, such as the field_seq_flag. The field sequence flag 306 indicates whether coded video sequence information includes video representing fields. The field sequence flag 306 can have a value of 1 to indicate the presence of fields and a value of 0 to indicate no fields are present.

The HEVC VUI scalable extension syntax 302 can include a timing information present flag 308, such as the timing_info_present_flag element, to indicate whether additional timing information is included in the video bitstream 110. The timing information present flag 308 can have a value of 0 to indicate that no additional timing information is included in the video bitstream 110. The timing information present flag 308 can have a value of 1 to indicate that the HEVC VUI scalable extension syntax 302 includes a tick units 310, a time scale 312, and a fixed picture rate flag 314.

The HEVC VUI scalable extension syntax 302 can include the tick units 310, such as the num_units_in tick element. The tick units 310 can indicate the number of time units of a clock operating at the frequency of the time scale 312. For example, the tick units 310 can have corresponding to the minimum interval of time that can be represented in the video bitstream 110.

The HEVC VUI scalable extension syntax 302 can include the time scale 312, such as the time_scale element. The time scale 312 is the number of time units in one second.

The HEVC VUI scalable extension syntax 302 can include the fixed picture rate flag 314, such as the fixed_pic_rate_flag element. The fixed picture rate flag 314 can indicate the whether the temporal distance between two consecutive pictures in the output order of the video stream 112 of FIG. 1 is constrained. The fixed picture rate flag 314 has a value of 0 to indicate that no constraint applies and a value of 1 to indicate that the temporal distance is constrained.

The HEVC VUI scalable extension syntax 302 can include a NAL HRD parameters present flag 316, such as the nal_hrd_parameters_present_flag element. The NAL HRD parameters present flag 316 can indicate the presence of the NAL HRD parameter information.

The NAL HRD parameters present flag 316 can have a value of 1 to indicate that a HRD parameters structure 318 is present in the video bitstream 110 or a value of 0 to indicate that the HRD parameters structure 318 is not present. The HRD parameters structure 318 is an occurrence of a HRD syntax defined below in the HRD syntax section.

The HEVC VUI scalable extension syntax 302 can include a VCL HRD parameters present flag 320, such as the vcl_hrd_parameters_present_flag element. The VCL HRD parameters present flag 320 can indicate the presence of the VCL HRD parameter information. The VCL HRD parameters present flag 320 can have a value of 1 to indicate that the HRD parameters structure 318 is present in the video bitstream 110 or a value of 0 to indicate that the HRD parameters structure 318 is not present.

The HRD parameters structure 318, such as the hrd_parameters element, includes the HRD parameters that vary for each of the temporal layers 230. The HRD parameters structure 318 is defined in detail in the HRD syntax section.

If the NAL HRD parameters present flag 316 or the VCL HRD parameters present flag 320 have a value of 1, then the HEVC VUI scalable extension syntax 302 can include a low delay flag 322 and a sub-picture CPB parameters present flag 324. The HEVC VUI scalable extension syntax 302 can include the low delay flag 322, such as the low_delay_hrd_flag element. The low delay flag 322 can indicates the HRD operational mode.

The HEVC VUI scalable extension syntax 302 can include the sub-picture CPB parameters present flag 324, such as the sub_pic_cpb_params_present_flag element. The sub-picture CPB parameters present flag 324 can indicate if sub-picture CPB parameters are present in the video bitstream 110.

If the sub-picture CPB parameters present flag 324 has a value of 1, then the HEVC VUI scalable extension syntax 302 can include a subunit ticks 326, such as the num of units_in_sub_tick element. The subunit ticks 326 can indicate the number of ticks to wait before removing timing supplemental enhancement information (SEI) messages.

The HEVC VUI scalable extension syntax 302 can include a bitstream restriction flag 328, such as a bitstream_restriction_flag element. The bitstream restriction flag 328 indicates that the coded video sequence bitstream restriction parameters are present in the video bitstream 110.

The bitstream restriction flag 328 has a value of 1 if the bitstream restriction parameters are included in the video bitstream 110 and a value of 0 if the bitstream restriction parameters are not present in the video bitstream 110. The bitstream restriction parameters can include a tiles fixed structure flag 330, a motion vector flag 332, a max bytes per picture denomination 334, a maximum bits per minimum cu denomination 336, a maximum motion vector horizontal length 338, and a maximum motion vector vertical length 340.

The tiles fixed structure flag 330, such as a tiles_fixed_structure_flag element, can indicate that each picture in the coded video sequence has the same number of tiles. The tiles fixed structure flag 330 can have to value of 1 to indicate that fixed tiles and a value of 0 to indicate otherwise.

The motion vector flag 332, such as a motion_vector_over_pic_boundaries_flag element, can indicate that no sample outside the picture boundaries is used for prediction. If the motion vector flag 332 has a value of 1, then one or more samples outside the picture boundaries may be used for prediction, otherwise no samples are used for prediction.

The max bytes per picture denomination 334, such as a max_bytes_per_pic_denom element, is a value indicating the maximum number of bytes for the sum of the sizes of the VCL NAL units associated with any coded picture in the coded video sequence. If the max bytes per picture denomination 334 has a value of 0, then no limits are indicated. Otherwise, it is a requirement of bitstream conformance that no coded pictures shall be represented in the video bitstream 110 by more bytes than the max bytes per picture denomination 334.

The maximum bits per minimum cu denomination 336, such as a max_bits_perimin_cu_denom element, is a value indicating the an upper bound for the number of coded bits of coding unit data for any coding block in any picture of the coded video sequence. If the maximum bits per minimum cu denomination 336 has a value of 0, then no limit is indicated. Otherwise, is a requirement of bitstream conformance that no coding unit shall be represented in the bitstream by more than the maximum bits per minimum cu denomination 336.

The maximum motion vector horizontal length 338, such as a log2_max_mv_length_horizontal element, indicates the maximum absolute value of a decoded horizontal motion vector component for all pictures in the video bitstream 110. The maximum motion vector vertical length 340, such as a log2_max_mv_length_vertical element, indicates the maximum absolute value of a decoded vertical motion vector component for all pictures in the video bitstream 110.

The HEVC VUI scalable extension syntax 302 can include a VUI extension flag 342, such as the vui_extension_flag element, for indicating that VUI extension information is included in the video bitstream 110. The VUI extension flag 342 can have a value of 1 to indicate that VUI extension information is included in the video bitstream 110 and a value of 0 to indicate otherwise.

The HEVC VUI scalable extension syntax 302 can include a more RBSP data flag 344, such as the more_rbsp_data element, for indicating that additional data is in the RBSP. The more RBSP data flag 344 can have a value of 1 when additional data is in the RBSP and a value of 0 otherwise.

The HEVC VUI scalable extension syntax 302 can include a VUI extension data flag 346, such as the VUI_extension_data_flag element, for indicating that VUI extension data is included in the video bitstream 110. The VUI extension data flag 346 can have a value of 1 when the VUI extension data is included in the video bitstream 110 and a value of 0 otherwise.

The HEVC VUI scalable extension syntax 302 can include a RBSP trailing bits 348, such as a rbsptrailing bits element, which is a data structure for flagging RBSP data. The RBSP trailing bits 348 can include the RBSP data, such as the rbsp_stop_one_bit element, for indicating the stop bit for the RBSP.

The HEVC VUI scalable extension syntax 302 can include a loop structure to represent the temporal layer specific information. The loop can include an iterator, such as [i], for indicating the information associated with each occurrence of the temporal layers 230 from 0 to the temporal layer count 304. For example, the HEVC VUI scalable extension syntax 302 loop structure can include the field sequence flag 306, the timing information present flag, the tick units 310, the time scale 312, the fixed picture rate flag 314, the NAL HRD parameters present flag 316, the VCL HRD parameters present flag 320, the HRD parameters structure 318, the low delay flag 322, the sub-picture CPB parameters present flag 324, and the subunit ticks 326.

It has been discovered that encoding and decoding the video content 108 of FIG. 1 using the HEVC VUI scalable extension syntax 302 to support each occurrence of the temporal layers 230 provides finer grained control over the representation of each occurrence of the temporal layers 230. Providing information for each occurrence of the temporal layers 230 increases the quality of display of the video stream 112.

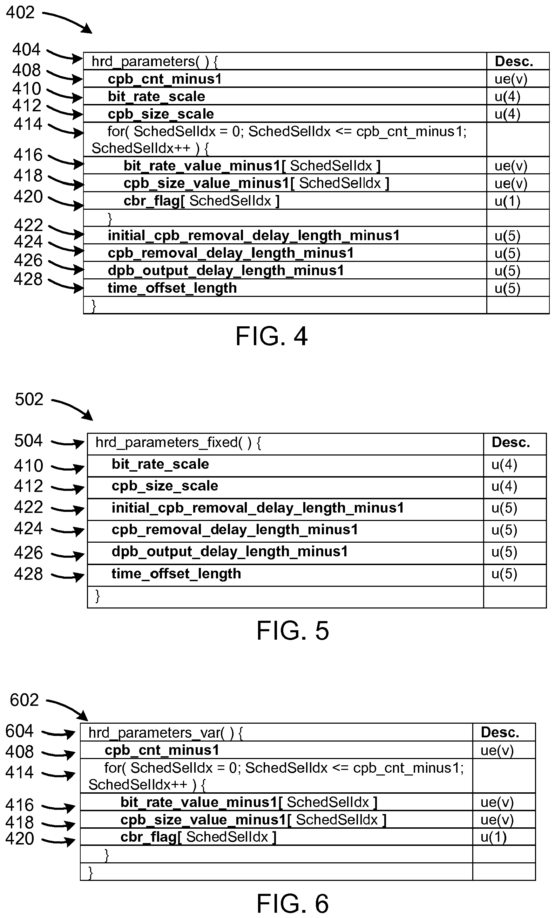

Referring now to FIG. 4, therein is shown an example of a HRD syntax 402. The HRD syntax 402 describes the parameters associated with the hypothetical reference decoder.

The HRD syntax 402 includes elements as described in the HRD base syntax table of FIG. 4. The elements of the HRD syntax 402 are arranged in a hierarchical structure as described in the HRD base syntax table of FIG. 4.

The HRD syntax 402 can include a HRD syntax header 404, such as the hrd_parameters element. The HRD syntax header 404 is a descriptor for identifying the HRD syntax 402.

The HRD syntax 402 can include a CPB count 408, such as a cpb_cnt_minusl element. The CPB count 408 can indicate the number of alternative delivery schedules having restricted bit rates and CPB size values.

The HRD syntax 402 can include a bit rate scale 410, such as a bit_rate_scale element. The bit rate scale 410 specifies the maximum input bit rate of the coded picture buffer (CPB).

The HRD syntax 402 can include a CPB size scale 412, such as a cpb_size_scale element. The CPB size scale 412 is for determining the size of the coded picture buffer.

The HRD syntax 402 can include a loop structure to define a set of parameters for each occurrence of the coded picture buffer. The loop structure is dimensioned based on a schedule selection index, such as a SchedSelIdx element. The HRD syntax 402 can include a bit rate value 416, a CPB size value 418, and a CBR flag 420 for each occurrence of the coded picture buffer.

The HRD syntax 402 can include the bit rate value 416, such as a bit_rate_value_minus1 element. The bit rate value 416 can be used to specify the maximum input bit rate for each occurrence of the coded picture buffer.

The HRD syntax 402 can include the CPB size value 418, such as a cpb_size_value_minus1 element. The CPB size value 418 can be used to determine the size of each occurrence of the coded picture buffer.

The HRD syntax 402 can include the CBR flag 420, such as a cbr flag element. The CBR flag 420 indicates the operation mode for decoding the video bitstream 110 of FIG. 1 for each occurrence of the coded picture buffer. If the CBR flag 420 has a value of 1, then the hypothetical stream delivery schedule (HSS) operates in a constant bit rate mode. Otherwise, the video bitstream 110 operates in an intermittent bit rate mode.

It has been discovered that using the HRD syntax 402 provides improved performance by enabling finer grained control over the processing of the individual occurrences of the coded picture buffer. Using individual occurrences of the HRD syntax 402 can provide improved processing speed by taking advantage of individual differences between different occurrences of the CPB.

The HRD syntax 402 can include an initial CPB removal delay length 422, such as a initial_cpb_removal_delay_length_minusl element. The initial CPB removal delay length 422 indicates the bit length of the elements initial_cpb_removal_delay and initial_cpb_removal_delay_offset of the buffering period SEI message.

The HRD syntax 402 can include a CPB removal delay length 424, such as a cpb_removal_delay_length_minus1 element. The CPB removal delay length 424 can specify the bit length of the elements cpb_removal_delay in the picture timing SEI message.

The HRD syntax 402 can include a DPB output delay length 426, such as a dpb_output_delay_length_minus1 element. The DPB output delay length 426 indicates the size of the decoded picture buffer (DPB).

The HRD syntax 402 can include a time offset length 428, such as a time_offset_length element. The time offset length 428 indicates the length in bits of the time_offset element.

The HRD syntax 402 can represent a set of normative requirements for the video bitstream 110. The HRD syntax 402 can be used to control the bit rate of the video bitstream 110. For example, the HRD syntax 402 can include parameters for controlling variable or constant bit rate operations, low-delay behavior, and delay-tolerant behavior.

In another example, the HRD syntax 402 be used to control the coded picture buffer performance, the number of coded picture buffers, and the size of the coded picture buffers using parameters such as the bit rate scale 410, the CPB count 408, and the CPB size scale 412. The HRD syntax 402 can be used for controlling the decoded picture buffer using parameters such as the DPB output delay length 426.

The video bitstream 110 can include NAL HRD parameters and VCL HRD parameters. The NAL HRD parameters pertain to the video bitstream 110 having non-VCL NAL units of data. The VCL HRD parameters pertain to the video bitstream 110 having VCL NAL units of data.

The HRD parameters structure 318 of FIG. 3 is an occurrence of a data structure describing parameters for the hypothetical reference decoder. For example, the HRD parameters structure 318 can be described by the HRD syntax 402.

It has been discovered that encoding and decoding the video content 108 of FIG. 1 using the HRD syntax 402 can reduce the size of the video bitstream 110 and reduces the amount of video buffering required to display the video stream 112 of FIG. 1. Reducing the size of the video bitstream 110 increases functionality and increases the performance of display of the video stream 112.

Referring now to FIG. 5, therein is shown an example of a HRD fixed syntax 502. The HRD fixed syntax 502 describes the parameters associated with the hypothetical reference decoder operation that do not vary based on the temporal layers 230 of FIG. 2, sub-layer, or CPB.

The HRD fixed syntax 502 includes elements as described in the HRD fixed syntax table of FIG. 5. The elements of the HRD fixed syntax 502 are arranged in a hierarchical structure as described in the HRD fixed syntax table of FIG. 5.

The HRD fixed syntax 502 can include a HRD fixed syntax header 504, such as the hrd_parameters_fixed element. The HRD fixed syntax header 504 is a descriptor for identifying the HRD fixed syntax 502.

The HRD fixed syntax 502 can include the bit rate scale 410, such as a bit_rate_scale element. The bit rate scale 410 specifies the maximum input bit rate of coded picture buffer (CPB).

The HRD fixed syntax 502 can include the CPB size scale 412, such as a cpb_size_scale element. The CPB size scale 412 is for determining the size of the coded picture buffers.

The HRD fixed syntax 502 can include the initial CPB removal delay length 422, such as a initial_cpb_removal_delay_length_minusl element. The initial CPB removal delay length 422 indicates the bit length of the elements initial_cpb_removal_delay and initial_cpb_removal_delay_offset of the buffering period SEI message.

The HRD fixed syntax 502 can include the CPB removal delay length 424, such as a cpb_removal_delay_length minus1 element. The CPB removal delay length 424 can specify the bit length of the elements cpb_removal_delay in the picture timing SEI message.

The HRD fixed syntax 502 can include the DPB output delay length 426, such as a dpb_output_delay_length_minus1 element. The DPB output delay length 426 indicates the size of the decoded picture buffer (DPB).

The HRD fixed syntax 502 can include the time offset length 428, such as a time_offset length element. The time offset length 428 indicates the length in bits of the time_offset element.

The HRD parameters structure 318 of FIG. 3 is an occurrence of a data structure describing parameters for the hypothetical reference decoder. For example, the HRD parameters structure 318 can be described by the HRD fixed syntax 502.

It has been discovered that using the HRD fixed syntax 502 provides simplified performance and reduced complexity by enabling consistent control over the processing of the decoding process. Using the HRD fixed syntax 502 can reduce complexity by sharing a single set of constant values for the HRD fixed syntax 502 over all of the temporal layers 230.

Referring now to FIG. 6, therein is shown an example of a HRD variable syntax 602. The HRD variable syntax 602 describes the variable parameters associated with the hypothetical reference decoder operation.

The HRD variable syntax 602 includes elements as described in the HRD variable syntax table of FIG. 6. The elements of the HRD variable syntax 602 are arranged in a hierarchical structure as described in the HRD variable syntax table of FIG. 6.

The HRD variable syntax 602 can include a HRD variable syntax header 604, such as the hrd_parameters_var element. The HRD variable syntax header 604 is a descriptor for identifying the HRD variable syntax 602.

The HRD variable syntax 602 can include the CPB count 408, such as the cpb_cnt_minus1 element. The CPB count 408 can indicate the number of alternative CPB specification in the video bitstream 110 of FIG. 1.

The HRD variable syntax 602 can include a loop structure to define a set of parameters for each occurrence of the coded picture buffer. The loop structure is dimensioned based on a schedule selection index 414 , such as the SchedSelIdx element. The HRD variable syntax 602 can include the bit rate value 416, the CPB size value 418, and the CBR flag 420 for each occurrence of the coded picture buffer.

The HRD variable syntax 602 can include the bit rate value 416, such as the bit_rate_value_minus1 element. The bit rate value 416 can be used to specify the maximum input bit rate for each occurrence of the coded picture buffer.

The HRD variable syntax 602 can include the CPB size value 418, such as the cpb_size_value_minus1 element. The CPB size value 418 can be used to determine the size of each occurrence of the coded picture buffer.

The HRD variable syntax 602 can include the CBR flag 420, such as the cbr flag element. The CBR flag 420 indicates the operation mode for decoding the video bitstream 110 for each occurrence of the coded picture buffer.

The HRD parameters structure 318 is an occurrence of a data structure describing parameters for the hypothetical reference decoder. For example, the HRD parameters structure 318 can be described by the HRD variable syntax 602.

It has been discovered that using the HRD variable syntax 602 provides improved performance by enabling finer grained control over the processing of coded picture buffer of the temporal layers 230. Using individual occurrences of the HRD variable syntax 602 can provide improved processing speed by taking advantage of individual differences between different occurrences of the temporal layers 230.

Referring now to FIG. 7, therein is shown an example of a HEVC VUI first extension syntax 702. The HEVC VUI first extension syntax 702 provides information for each occurrence of the temporal layers 230 of FIG. 2 in the video bitstream 110 of FIG. 1.

The HEVC VUI first extension syntax 702 describes the elements in the HEVC VUI first extension syntax table of FIG. 7. The elements of the HEVC VUI first extension syntax 702 are arranged in a hierarchical structure as described in the HEVC VUI first extension syntax table of FIG. 7.

The HEVC VUI scalable extension syntax 302 of FIG. 3 can described the VUI parameters of the video coding system 100 of FIG. 1. For example, the HEVC VUI scalable extension syntax 302 can be an occurrence of the HEVC VUI first extension syntax 702. Terms such as first or second are used for identification purposes only and do not indicate any order, priority, importance, or precedence.

The HEVC VUI first extension syntax 702 includes a HEVC VUI first extension syntax header 704, such as the vui_parameters element. The HEVC VUI first extension syntax header 704 is a descriptor for identifying the HEVC VUI first extension syntax 702. The HEVC VUI first extension syntax 702 is used to encode and decode the video bitstream 110.

The HEVC VUI first extension syntax 702 can include a HRD fixed parameters structure 706, such as a hrd_parameters_fixed element. The HRD fixed parameters structure 706 is an occurrence of HRD fixed syntax 502 of FIG. 5. The HRD fixed parameters structure 706 includes the HRD parameters that are constant for all of the temporal layers 230. The HRD fixed parameters structure 706 includes information for both the NAL HRD and VCL hypothetical reference decoders.

The HEVC VUI first extension syntax 702 can include the temporal layer count 304, such as vui_max_temporal_layers_minusl element, for identifying the number of the temporal layers 230 in the video bitstream 110 of FIG. 1. The HEVC VUI first extension syntax 702 can include the field sequence flag 306, such as the field_seq_flag. The field sequence flag 306 indicates whether coded video sequence information includes video representing fields.

The timing information present flag 308, such as the timing_info_present_flag element, can indicate whether additional timing information is included in the video bitstream 110. The timing information present flag 308 can have a value of 0 to indicate that no additional timing information is included in the video bitstream 110. The timing information present flag 308 can have a value of 1 to indicate that the HEVC VUI first extension syntax 702 includes the tick units 310, the time scale 312, and the fixed picture rate flag 314.

The HEVC VUI first extension syntax 702 can include the tick units 310, such as the num_units_in_tick element. The tick units 310 can indicate the number of time units of a clock operating at the frequency of the time scale 312.

The HEVC VUI first extension syntax 702 can include the time scale 312, such as the time_scale element. The time scale 312 is the number of time units in one second.

The HEVC VUI first extension syntax 702 can include the fixed picture rate flag 314, such as the fixed_pic_rate_flag element. The fixed picture rate flag 314 can indicate the whether the temporal distance between two consecutive pictures in the output order of the video stream 112 of FIG. 1 is constrained.

The HEVC VUI first extension syntax 702 can include the NAL HRD parameters present flag 316, such as the nal_hrd_parameters_present_flag element. The NAL HRD parameters present flag 316 can indicate the presence of the NAL HRD parameter information. The NAL HRD parameters present flag 316 can have a value of 1 to indicate that a HRD variable parameters structure 708 is present in the video bitstream 110 or a value of 0 to indicate that the HRD variable parameters structure 708 is not present.

The HEVC VUI first extension syntax 702 can include the VCL HRD parameters present flag 320, such as the vcl_hrd_parameters_present_flag element. The VCL HRD parameters present flag 320 can indicate the presence of the VCL HRD parameter information. The VCL HRD parameters present flag 320 can have a value of 1 to indicate that the HRD variable parameters structure 708 is present in the video bitstream 110 or a value of 0 to indicate that the HRD variable parameters structure 708 is not present.

The HRD variable parameters structure 708, such as the hrd_parameters_var element, includes the HRD parameters that vary for each of the temporal layers 230. The HRD variable parameters structure 708 is defined in detail in the HRD variable syntax section. The HRD variable parameters structure 708 includes the CPB count 408 of FIG. 4, the bit rate value 416 of FIG. 4, the CPB size value 418 of FIG. 4, and the CBR flag 420 of FIG. 4. The HRD variable parameters structure 708 can vary for each of the temporal layers 230.

If the NAL HRD parameters present flag 316 or the VCL HRD parameters present flag 320 have a value of 1, then the HEVC VUI first extension syntax 702 can include the low delay flag 322 and the sub-picture CPB parameters present flag 324. The HEVC VUI first extension syntax 702 can include the low delay flag 322, such as the low_delay_hrd_flag element. The low delay flag 322 can indicates the HRD operational mode.

The HEVC VUI first extension syntax 702 can include the sub-picture CPB parameters present flag 324, such as the sub_pic_cpb_params_present_flag element. The sub-picture CPB parameters present flag 324 can indicate if sub-picture CPB parameters are present in the video bitstream 110.

If the sub-picture CPB parameters present flag 324 has a value of 1, then the HEVC VUI first extension syntax 702 can include the subunit ticks 326, such as the num_of_units_in_sub_tick element. The subunit ticks 326 can indicate the number of ticks to wait before removing timing supplemental enhancement information (SEI) messages.

The HEVC VUI first extension syntax 702 can include the bitstream restriction flag 328, such as a bitstream_restriction_flag element. The bitstream restriction flag 328 indicates that the coded video sequence bitstream restriction parameters are present in the video bitstream 110.

The bitstream restriction flag 328 has a value of 1 if the bitstream restriction parameters are included in the video bitstream 110 and a value of 0 if the bitstream restriction parameters are not present in the video bitstream 110. The bitstream restriction parameters can include the tiles fixed structure flag 330, the motion vector flag 332, the max bytes per picture denomination 334, the maximum bits per minimum cu denomination 336, the maximum motion vector horizontal length 338, and the maximum motion vector vertical length 340.

The tiles fixed structure flag 330, such as a tiles_fixed_structure_flag element, can indicate that each picture in the coded video sequence has the same number of tiles. The motion vector flag 332, such as a motion_vector_over_pic_boundaries_flag element, can indicate that no sample outside the picture boundaries is used for prediction.

The max bytes per picture denomination 334, such as a max_bytes_per_pic_denom element, is a value indicating the maximum number of bytes for the sum of the sizes of the VCL NAL units associated with any coded picture in the coded video sequence. The maximum bits per minimum cu denomination 336, such as a max_bits_per_min_cu_denom element, is a value indicating the an upper bound for the number of coded bits of coding unit data for any coding block in any picture of the coded video sequence.

The maximum motion vector horizontal length 338, such as a log2_max_mv_length_horizontal element, indicates the maximum absolute value of a decoded horizontal motion vector component for all pictures in the video bitstream 110. The maximum motion vector vertical length 340, such as a log2_max_mv_length_vertical element, indicates the maximum absolute value of a decoded vertical motion vector component for all pictures in the video bitstream 110.

The HEVC VUI first extension syntax 702 can include the VUI extension flag 342, such as the vui_extension_flag element, for indicating that VUI extension information is included in the video bitstream 110. The VUI extension flag 342 can have a value of 1 to indicate that VUI extension information is included in the video bitstream 110 and a value of 0 to indicate otherwise.

The HEVC VUI first extension syntax 702 can include the more RBSP data flag 344, such as the more_rbsp_data element, for indicating that additional data is in the RBSP. The more RBSP data flag 344 can have a value of 1 when additional data is in the RBSP and a value of 0 otherwise.

The HEVC VUI first extension syntax 702 can include the VUI extension data flag 346, such as the VUI_extension_data_flag element, for indicating that VUI extension data is included in the video bitstream 110. The VUI extension data flag 346 can have a value of 1 when the VUI extension data is included in the video bitstream 110 and a value of 0 otherwise.

The HEVC VUI first extension syntax 702 can include the RBSP trailing bits 348, such as a rbsptrailing bits element, which is a data structure for flagging RBSP data. The RBSP trailing bits 348 can include the RBSP data, such as the rbsp_stop_one_bit element, for indicating the stop bit for the RBSP.

The HEVC VUI first extension syntax 702 can include a loop structure to represent the temporal layer specific information. The loop can include an iterator, such as [i], for indicating the information associated with each occurrence of the temporal layers 230 from 0 to the temporal layer count 304. For example, the HEVC VUI first extension syntax 702 loop structure can include the field sequence flag 306, the timing information present flag, the tick units 310, the time scale 312, the fixed picture rate flag 314, the NAL HRD parameters present flag 316, the VCL HRD parameters present flag 320, the HRD variable parameters structure 708, the low delay flag 322, the sub-picture CPB parameters present flag 324, and the subunit ticks 326.

The HEVC VUI first extension syntax 702 includes the HRD fixed parameters structure 706 outside of the loop structure representing the temporal layer specific information. The HRD variable parameters structure 708 is part of the loop structure representing the temporal layer specific information. The HRD variable parameters structure 708 can include parameters for both NAL HRD and VCL HRD.

It has been discovered that encoding and decoding the video content 108 of FIG. 1 using the HEVC VUI first extension syntax 702 having the HRD fixed parameters structure 706 constant for all of the temporal layers 230 and the HRD variable parameters structure 708 variable for each of the temporal layers 230 provides reduced complexity and increased performance. The HRD fixed parameters structure 706 provides simplified performance and reduced complexity by enabling consistent control over the processing of the decoding process. The HRD variable parameters structure 708 provides finer grained control over the representation of each occurrence of the temporal layers 230.

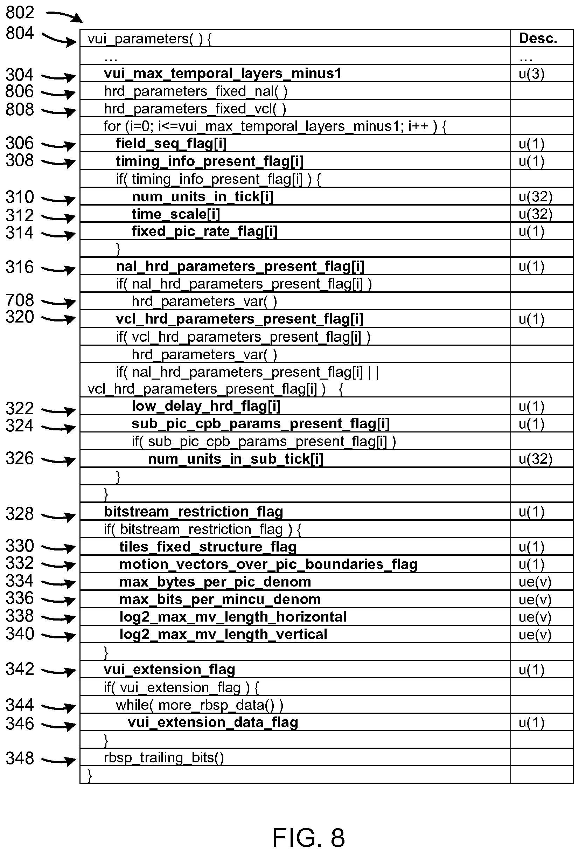

Referring now to FIG. 8, therein is shown an example of a HEVC VUI second extension syntax 802. The HEVC VUI second extension syntax 802 provides information for each occurrences of the temporal layers 230 of FIG. 2 in the video bitstream 110 of FIG. 1.

The HEVC VUI second extension syntax 802 describes the elements in the HEVC VUI second extension syntax table of FIG. 8. The elements of the HEVC VUI second extension syntax 802 are arranged in a hierarchical structure as described in the HEVC VUI second extension syntax table of FIG. 8.

The HEVC VUI second extension syntax 802 includes a HEVC VUI second extension syntax header 804, such as the vui_parameters element. The HEVC VUI second extension syntax header 804 is a descriptor for identifying the HEVC VUI second extension syntax 802. The HEVC VUI second extension syntax 802 is used to encode and decode the video bitstream 110.

The HEVC VUI scalable extension syntax 302 of FIG. 3 can described the VUI parameters of the video coding system 100 of FIG. 1. For example, the HEVC VUI scalable extension syntax 302 can be an occurrence of the HEVC VUI second extension syntax 802. Terms such as first or second are used for identification purposes only and do not indicate any order, priority, importance, or precedence.

The HEVC VUI second extension syntax 802 can include the temporal layer count 304, such as vui_max_temporal_layers_minus1 element, for identifying the number of the temporal layers 230 in the video bitstream 110 of FIG. 1. The temporal layer count 304 is the number of the temporal layers 230 minus 1 to map the temporal layer count 304 from 0 to the number of temporal layers minus 1.

The HEVC VUI second extension syntax 802 can include a HRD NAL fixed parameters structure 806, such as a hrd_parameters_fixed_nal element. The HRD NAL fixed parameters structure 806 includes HRD parameters for the network abstraction layer that are constant for all of the temporal layers 230.

The HEVC VUI second extension syntax 802 can include a HRD VCL fixed parameters structure 808, such as a hrd_parameters_fixed_vcl element. The HRD VCL fixed parameters structure 808 includes HRD parameters for the video coding layer that are constant for all of the temporal layers 230.

The HRD NAL fixed parameters structure 806 can refer to the network abstraction layer parameters that encapsulate the slice output of the VCL encoder into NAL units which are suitable for transmission over packet networks. The VCL video data and non-VCL metadata can be formatted for a variety of networks and provides network friendliness for transporting the video content 108 over various network types.

The HRD VCL fixed parameters structure 808 can contain signal processing related parameters and can represent the video content 108 in an efficient manner. The video coding layer parameters can be used to encode and decode slices, which are bit strings containing coded blocks of pixels for portions of a frame.

The syntax structure of the HRD NAL fixed parameters structure 806 and the HRD VCL fixed parameters structure 808 can have the same elements as the HRD fixed parameters structure 708 of FIG. 7. The video bitstream 110 can include multiple layers of video and metadata information including the network abstraction layer and the video coding layer. The HRD NAL fixed parameters structure 806 can be applied to network abstraction layer information in the video bitstream 110. The HRD VCL fixed parameters structure 808 can be applied to video coding layer information in the video bitstream 110.

The video bitstream 110 can include frames from the video content 108 of FIG. 1. The frames can be partitioned into multiple slices which can represent blocks of pixels within the frames.

The video bitstream 110 can include network abstraction layer packets having information payloads. The information payloads can include VCL and non-VCL information, such as video information and metadata respectively.

The HEVC VUI second extension syntax 802 can include the field sequence flag 306, such as the field-seq_flag. The field sequence flag 306 indicates whether coded video sequence information includes video representing fields. The field sequence flag 306 can have a value of 1 to indicate the presence of fields and a value of 0 to indicate no fields are present.

The timing information present flag 308, such as the timing_info_present_flag element, can indicate whether additional timing information is included in the video bitstream 110. The timing information present flag 308 can have a value of 0 to indicate that no additional timing information is included in the video bitstream 110. The timing information present flag 308 can have a value of 1 to indicate that the HEVC VUI second extension syntax 802 includes the tick units 310, the time scale 312, and the fixed picture rate flag 314.

The HEVC VUI second extension syntax 802 can include the tick units 310, such as the num_units_in_tick element. The tick units 310 can indicate the number of time units of a clock operating at the frequency of the time scale 312.

The HEVC VUI second extension syntax 802 can include the time scale 312, such as the time_scale element. The time scale 312 is the number of time units in one second.

The HEVC VUI second extension syntax 802 can include the fixed picture rate flag 314, such as the fixed_pic_rate_flag element. The fixed picture rate flag 314 can indicate the whether the temporal distance between two consecutive pictures in the output order of the video stream 112 of FIG. 1 is constrained.

The HEVC VUI second extension syntax 802 can include the NAL HRD parameters present flag 316, such as the nal_hrd_parameters_present_flag element. The NAL HRD parameters present flag 316 can indicate the presence of the NAL HRD parameter information. The NAL HRD parameters present flag 316 can have a value of 1 to indicate that the HRD variable parameters structure 708 is present in the video bitstream 110 or a value of 0 to indicate that the HRD variable parameters structure 708 is not present.

The HEVC VUI second extension syntax 802 can include the VCL HRD parameters present flag 320, such as the vcl_hrd_parameters_present_flag element. The VCL HRD parameters present flag 320 can indicate the presence of the VCL HRD parameter information. The VCL HRD parameters present flag 320 can have a value of 1 to indicate that the HRD variable parameters structure 708 is present in the video bitstream 110 or a value of 0 to indicate that the HRD variable parameters structure 708 is not present.

The HRD variable parameters structure 708, such as the hrd_parameters_var element, includes the HRD parameters that vary for each of the temporal layers 230. The HRD variable parameters structure 708 is defined in detail in the HRD variable syntax section. The HRD variable parameters structure 708 includes the CPB count 408, the bit rate value 416, the CPB size value 418, and the CBR flag 420. The HRD variable parameters structure 708 can vary for each of the temporal layers 230.

If the NAL HRD parameters present flag 316 or the VCL HRD parameters present flag 320 have a value of 1, then the HEVC VUI second extension syntax 802 can include the low delay flag 322 and the sub-picture CPB parameters present flag 324. The HEVC VUI second extension syntax 802 can include the low delay flag 322, such as the low_delay_hrd_flag element. The low delay flag 322 can indicates the HRD operational mode.

The HEVC VUI second extension syntax 802 can include the sub-picture CPB parameters present flag 324, such as the sub_pic_cpb_params_present_flag element. The sub-picture CPB parameters present flag 324 can indicate if sub-picture CPB parameters are present in the video bitstream 110.

If the sub-picture CPB parameters present flag 324 has a value of 1, then the HEVC VUI second extension syntax 802 can include the subunit ticks 326, such as the num_of_units_in_sub_tick element. The subunit ticks 326 can indicate the number of ticks to wait before removing timing supplemental enhancement information (SEI) messages.

The HEVC VUI second extension syntax 802 can include the bitstream restriction flag 328, such as a bitstream_restriction_flag element. The bitstream restriction flag 328 indicates that the coded video sequence bitstream restriction parameters are present in the video bitstream 110.

The bitstream restriction flag 328 has a value of 1 if the bitstream restriction parameters are included in the video bitstream 110 and a value of 0 if the bitstream restriction parameters are not present in the video bitstream 110. The bitstream restriction parameters can include the tiles fixed structure flag 330, the motion vector flag 332, the max bytes per picture denomination 334, the maximum bits per minimum cu denomination 336, the maximum motion vector horizontal length 338, and the maximum motion vector vertical length 340.

The tiles fixed structure flag 330, such as a tiles_fixed_structure_flag element, can indicate that each picture in the coded video sequence has the same number of tiles. The motion vector flag 332, such as a motion_vector_over_pic_boundaries_flag element, can indicate that no sample outside the picture boundaries is used for prediction.

The max bytes per picture denomination 334, such as a max_bytes_per_pic_denom element, is a value indicating the maximum number of bytes for the sum of the sizes of the VCL NAL units associated with any coded picture in the coded video sequence. The maximum bits per minimum cu denomination 336, such as a max_bits_per_min_cu_denom element, is a value indicating the an upper bound for the number of coded bits of coding unit data for any coding block in any picture of the coded video sequence.

The maximum motion vector horizontal length 338, such as a log2_max_mv_length_horizontal element, indicates the maximum absolute value of a decoded horizontal motion vector component for all pictures in the video bitstream 110. The maximum motion vector vertical length 340, such as a log2_max_mv_length_vertical element, indicates the maximum absolute value of a decoded vertical motion vector component for all pictures in the video bitstream 110.

The HEVC VUI second extension syntax 802 can include the VUI extension flag 342, such as the vui_extension_flag element, for indicating that VUI extension information is included in the video bitstream 110. The VUI extension flag 342 can have a value of 1 to indicate that VUI extension information is included in the video bitstream 110 and a value of 0 to indicate otherwise.

The HEVC VUI second extension syntax 802 can include the more RBSP data flag 344, such as the more_rbsp_data element, for indicating that additional data is in the RBSP. The more RBSP data flag 344 can have a value of 1 when additional data is in the RBSP and a value of 0 otherwise.

The HEVC VUI second extension syntax 802 can include the VUI extension data flag 346, such as the VUI_extension_data_flag element, for indicating that VUI extension data is included in the video bitstream 110. The VUI extension data flag 346 can have a value of 1 when the VUI extension data is included in the video bitstream 110 and a value of 0 otherwise.

The HEVC VUI second extension syntax 802 can include the RBSP trailing bits 348, such as a rbsptrailing bits element, which is a data structure for flagging RBSP data. The RBSP trailing bits 348 can include the RBSP data, such as the rbsp_stop_one_bit element, for indicating the stop bit for the RBSP.

The HEVC VUI second extension syntax 802 can include a loop structure to represent the temporal layer specific information. The loop can include an iterator, such as [i], for indicating the information associated with each occurrence of the temporal layers 230 from 0 to the temporal layer count 304. For example, the HEVC VUI second extension syntax 802 loop structure can include the field sequence flag 306, the timing information present flag, the tick units 310, the time scale 312, the fixed picture rate flag 314, the NAL HRD parameters present flag 316, the VCL HRD parameters present flag 320, the HRD variable parameters structure 708, the low delay flag 322, the sub-picture CPB parameters present flag 324, and the subunit ticks 326.

It has been discovered that encoding and decoding the video content 108 of FIG. 1 using the HEVC VUI second extension syntax 802 having the HRD NAL fixed parameters structure 806 and the HRD VCL fixed parameters structure 808 provides reduced complexity by removing the HRD NAL fixed parameters structure 806 and the HRD VCL fixed parameters structure 808 from the loop structure. Providing constant values for all of the temporal layers 230 simplifies the operation of the video coding system 100 of FIG. 1.

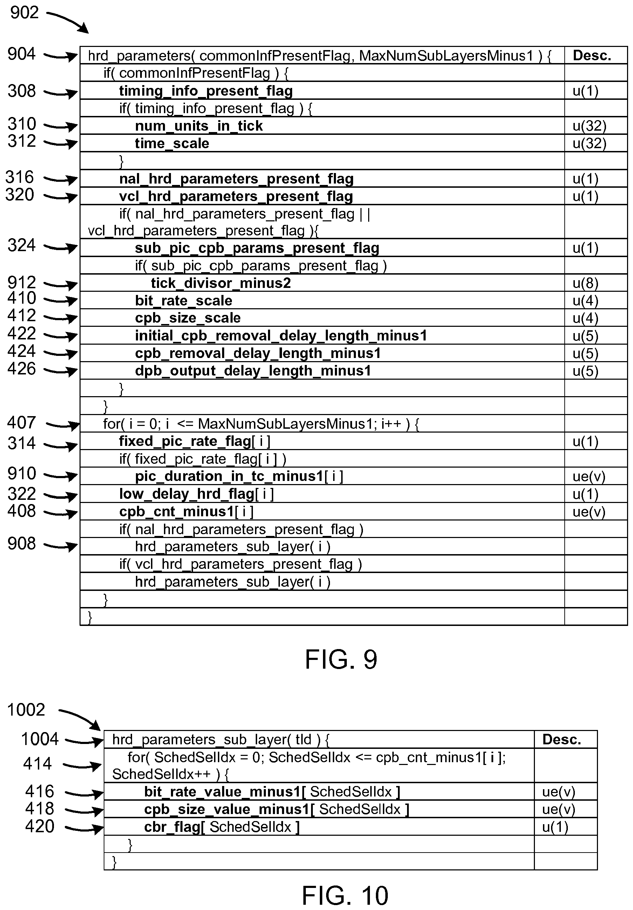

Referring now to FIG. 9, therein is shown an example of a HRD base syntax 902. The HRD base syntax 902 describes the parameters associated with the hypothetical reference decoder operation.

The HRD base syntax 902 includes elements as described in the HRD syntax table of FIG. 9. The elements of the HRD base syntax 902 are arranged in a hierarchical structure as described in the HRD syntax table of FIG. 9.

The HRD base syntax 902 can include a HRD base syntax header 904, such as the hrd_parameters element. The HRD base syntax header 904 is a descriptor for identifying the HRD base syntax 902.

The HRD base syntax 902 can include the HRD parameters structure 318 of FIG. 3 that includes the timing present information, the NAL HRD parameters, the VCL HRD parameters, and the fixed pic rate information. The timing present information can include the timing information present flag 308, the tick units 310, and the time scale 312.

The timing information present flag 308, such as the timing_info_present_flag element, can indicate whether timing information is included in the video bitstream 110 of FIG. 1. The timing information present flag 308 can have a value of 1 to indicate timing information is in the video bitstream 110 and a value of 0 to indicate that timing information is not included in the video bitstream 110.

The tick units 310, such as the num_units_in_tick element, can indicate the number of time units of a clock operating at the frequency of the time scale 312. For example, the tick units 310 can have corresponding to the minimum interval of time that can be represented in the video bitstream 110. The time scale 312, such as the time_scale element, is the number of time units that pass in one second.

The NAL HRD parameters present flag 316, such as the nal_hrd_parameters_present_flag element, can indicate the presence of the NAL HRD parameter information. The NAL HRD parameters present flag 316 can have a value of 1 to indicate that the HRD base syntax 902 is present and a value of 0 to indicate the HRD base syntax 902 is not present in the video bitstream 110.

The VCL HRD parameters present flag 320, such as the vcl_hrd_parameters_present_flag element, can indicate the presence of the HRD information for VCL. The VCL HRD parameters present flag 320 can have a value of 1 to indicate that the HRD base syntax 902 is present and a value of 0 to indicate the HRD base syntax 902 is not present in the video bitstream 110.

If the NAL HRD parameters present flag 316 or the VCL HRD parameters present flag 320 has a value of 1, then the HRD base syntax 902 can include additional elements. For example, the HRD base syntax 902 can include the sub-picture CPB parameters present flag 324, the bit rate scale 410, the CPB size scale 412, the initial CPB removal delay length 422, the CPB removal delay length 424, and the DPB output delay length 426.

The sub-picture CPB parameters present flag 324, such as the sub_pic_cpb_params_present_flag element, can indicate if sub-picture CPB parameters are present in the video bitstream 110. If the sub-picture CPB parameters present flag 324 has a value of 1, then the HRD base syntax 902 can include a tick divisor 912, such as a tick_divisor_minus2 element, to specify the minimum interval of time that can be represented in the video bitstream 110.

The HRD base syntax 902 can include the bit rate scale 410, such as a bit_rate_scale element. The bit rate scale 410 specifies the maximum input bit rate of coded picture buffer (CPB).

The HRD base syntax 902 can include the CPB size scale 412, such as a cpb_size_scale element. The CPB size scale 412 is for determining the size of the CPB.

The HRD base syntax 902 can include the initial CPB removal delay length 422, such as a initial_cpb_removal_delay_length_minusl element. The initial CPB removal delay length 422 indicates the bit length of the elements initial_cpb_removal_delay and initial_cpb_removal_delay_offset of the buffering period SEI message.

The HRD base syntax 902 can include the CPB removal delay length 424, such as a cpb_removal_delay_length_minus1 element. The CPB removal delay length 424 can specify the bit length of the elements cpb _removal_ delay in the picture timing SEI message.

The HRD base syntax 902 can include the DPB output delay length 426, such as a dpb_output_delay_length_minus1 element. The DPB output delay length 426 indicates the size of the decoded picture buffer (DPB).

The HRD base syntax 902 can include a set of parameters for each occurrence of the temporal layers 230 of FIG. 2. The HRD base syntax 902 can include a loop structure using an iterator, such as [i], to describe parameters for each occurrence of the temporal layers 230.

The HRD base syntax 902 can include a sub-layer count 407, such as the MaxNumSubLayersMinus1 element. The sub-layer count 407 indicates the maximum number of the sub-layers in the video bitstream 110.

The HRD base syntax 902 can include the fixed picture rate flag 314, such as a fixed_pic_rate_flag element, to indicate whether the temporal distance between the HRD output times of any two consecutive pictures in the video bitstream 110 is constrained. If the fixed picture rate flag 314 has a value of 1, then the temporal distance between any two consecutive pictures is constrained and a value of 0 if not constrained.

If the fixed picture rate flag 314 has a value of 1, then the HRD base syntax 902 can include a picture duration 910, such as a pic_duration_in_tc_minus1 element. The picture duration 910 can indicate the temporal distance between the HRD output times of any two consecutive pictures in output order in the coded video sequence.

The HRD base syntax 902 can include the low delay flag 322, such as a low_delay_hrd_flag element. The low delay flag 322 can indicate the HRD operational mode.

The HRD base syntax 902 can include the CPB count 408, such as a cpb_cnt_minus1 element. The CPB count 408 can indicate the number of alternative CPB specification in the video bitstream 110.

If the NAL HRD parameters present flag 316 has a value of 1, then the HRD base syntax 902 can include a HRD sub-layers parameters structure 908, such as a hrd_parameters_sub_layer element, for each occurrence of the temporal layers 230. The HRD sub-layers parameters structure 908 can describe the parameters related to each sub-layer. The HRD sub-layers parameters structure 908 can include parameters for each of the sub-layers of the temporal layers 230. The sub-layers can include VCL NAL units associated with each of the temporal layers 230 and the associated non-VCL NAL units.

If the VCL HRD parameters present flag 320 has a value of 1, then the HRD base syntax 902 can include the HRD sub-layers parameters structure 908, such as a hrd_parameters_sub_layer element, for each occurrence of the temporal layers 230. The HRD sub-layers parameters structure 908 can describe the parameters related to each sub-layer.

It has been discovered that encoding and decoding the video content 108 of FIG. 1 using the HRD base syntax 902 can reduce the size of the video bitstream 110 and reduces the amount of video buffering required to display the video stream 112 of FIG. 1. Reducing the size of the video bitstream 110 increases functionality and increases the performance of display of the video stream 112.

Referring now to FIG. 10, therein is shown an example of a HRD sub-layer syntax 1002. The HRD sub-layer syntax 1002 describes the parameters associated with the sub-layers of the temporal layers 230 of FIG. 2 for the hypothetical reference decoder.

The HRD sub-layer syntax 1002 includes elements as described in the HRD sub-layer syntax table of FIG. 10. The elements of the HRD sub-layer syntax 1002 are arranged in a hierarchical structure as described in the HRD sub-layer syntax table of FIG. 10.

The HRD sub-layer syntax 1002 can include a HRD sub-layer syntax header 1004, such as a HRD_parameters_sub_layer element. The HRD sub-layer syntax header 1004 is a descriptor for identifying the HRD sub-layer syntax 1002.

The HRD sub-layer syntax 1002 can include a loop structure to define a set of parameters for each occurrence of the coded picture buffer. The loop structure is dimensioned based on the schedule selection index 414, such as a SchedSelIdx element.

The HRD sub-layer syntax 1002 can include the bit rate value 416, such as a bit_rate_value_minus1 element. The bit rate value 416 can be used to specify the maximum input bit rate for each occurrence of the coded picture buffer.

The HRD sub-layer syntax 1002 can include the CPB size value 418, such as a cpb_size_value_minus1 element. The CPB size value 418 can be used to determine the size of each occurrence of the coded picture buffer.

The HRD sub-layer syntax 1002 can include the CBR flag 420, such as a cbr flag element. The CBR flag 420 indicates the operation mode for decoding the video bitstream 110 of FIG. 1 for each occurrence of the coded picture buffer. If the CBR flag 420 has a value of 1, then the hypothetical stream delivery schedule operates in a constant bit rate mode. Otherwise, the video bitstream 110 includes an intermittent bit rate mode.

The HRD sub-layer syntax 1002 can describe properties of the temporal layers 230 of FIG. 2. The temporal layers 230 can also be designated as sub-layers of the video bitstream 110 of FIG. 1.

The HRD sub-layer syntax 1002 can represent the sub-layers or the temporal layers 230 of the video bitstream 110. The HRD sub-layer syntax 702 can be used to select one of the sub-layers or one of the temporal layers 230 and allow the removal occurrences of other sub-layers from the video bitstream 110.

Removing occurrences of the sub-layers or the temporal layers 230 can reduce the overall volume of data within the video bitstream 110 and enable bit-rate reduction or resizing of the video content 108 of FIG. 1 for better transmission, improved storage bandwidth control and adjustment. Providing sub-layer or temporal layer specific HRD parameters enable better and smoother bitstream decoding to generate the video stream 112 of FIG. 1.

It has been discovered that using the HRD sub-layer syntax 1002 provides improved performance by enabling finer grained control over the processing of the individual sub-layers associated with the temporal layers 230. Using individual occurrences of the HRD sub-layer syntax 1002 can provide improved processing speed by taking advantage of individual differences between different sub-layers.

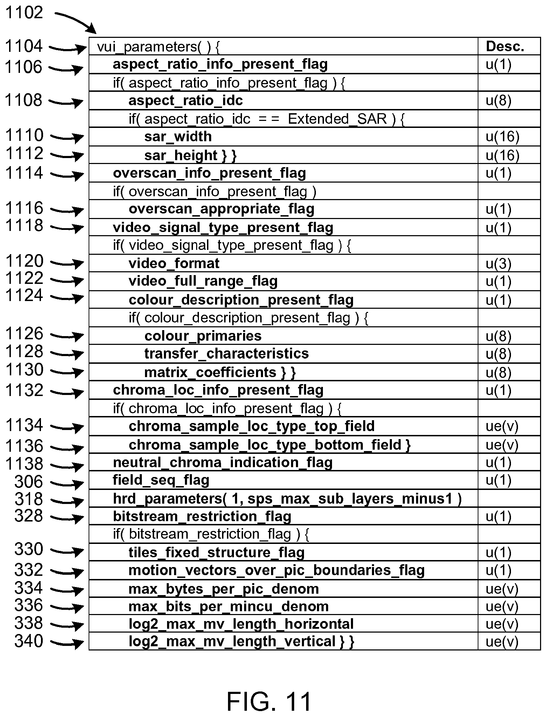

Referring now to FIG. 11, therein is shown an example of a HRD VUI syntax 1102. The HRD VUI syntax 1102 describes the parameters associated with the hypothetical reference decoder.

The HRD VUI syntax 1102 includes elements as described in the HRD VUI syntax table of FIG. 11. The elements of the HRD VUI syntax 1102 are arranged in a hierarchical structure as described in the HRD VUI syntax table of FIG. 11.

The HRD VUI syntax 1102 can include a HRD VUI syntax header 1104, such as the vui_parameters element. The HRD VUI syntax header 1104 is a descriptor for identifying the HRD VUI syntax 1102.

The HRD VUI syntax 1102 can include aspect ratio information about the aspect ratio of the video content 108 of FIG. 1. The HRD VUI syntax 1102 can include an aspect ratio flag 1106, an aspect ratio indicator 1108, an aspect ratio width 1110 and an aspect ratio height 1112, or a combination thereof.

The HRD VUI syntax 1102 can include the aspect ratio flag 1106, such as the aspect_ratio_info_present_flag element, to show that additional aspect ratio information is encoded in the video bitstream 110 of FIG. 1. The aspect ratio flag 1106 can have a value 0 to indicate that aspect ratio information is not in the video bitstream 110 and a value of 1 to indicate that aspect ratio information is included in the video bitstream 110.

The aspect ratio indicator 1108 is a value describing the aspect ratio of the video content 108. For example, the aspect ratio indicator 1108, such as the aspect_ratio_idc element, can include an index value for an enumerated list of predefined aspect ratios for the video content 108. In a further example, the aspect ratio indicator 1108 can include a value indicating that the aspect ratio can be described by individual values for the aspect ratio width 1110 and the aspect ratio height 1112.

The aspect ratio width 1110, such as the sar_width element, can describe the width of the video content 108. The aspect ratio height 1112, such as the sar_height element, can describe the height of the video content 108. The aspect ratio width 1110 and the aspect ratio height 1112 can describe the dimensions of the video content in ratios, pixels, lines, inches, centimeters, or a combination thereof.

The HRD VUI syntax 1102 can include overscan information for the video content 108. The HRD VUI syntax 1102 can include an overscan present flag 1114 and an overscan appropriate flag 1116.

Overscan is defined as display processes in which some parts near the borders of the cropped decoded pictures of the video stream 112 of FIG. 1 are not visible in the display area of the video stream 112. Underscan is defined as display processes in which the entire cropped decoded pictures of the video stream 112 are visible in the display area, but do not cover the entire display area.

The overscan present flag 1114 can indicate if overscan information is included in the video bitstream 110. The overscan present flag 1114, such as the overscan_info_present_flag, can have a value of 1 to indicate that overscan information is present in the video bitstream or a value of 0 to indicate that overscan information is not present in the video bitstream 110.

The overscan appropriate flag 1116 can indicate that the video content 108 encoded in the video bitstream 110 can be displayed using overscan. The overscan appropriate flag 1116, such as an overscan_appropriate_flag element, can have a value of 1 to indicate that the cropped decoded pictures of the video stream 112 are suitable for display using overscan. The overscan appropriate flag 1116 can have a value of zero to indicate that the cropped decoded pictures of the video stream 112 contain visually important information and should not be displayed using overscan.

The HRD VUI syntax 1102 can include video signal type information for the video content 108. The HRD VUI syntax 1102 can include a video signal present flag 1118, a video format 1120, a video full range flag 1122, a color description present flag 1124, a color primaries 1126, a transfer characteristics 1128, and a matrix coefficient 1130.

The video signal present flag 1118, such as the video_signal_type_present_flag element, can indicate that video signal type information is included in the video bitstream 110. The video signal present flag 1118 can have a value of 1 to indicate that additional video signal type information is present in the video bitstream 110. The video signal present flag 1118 can have a value of 0 to indicate that no video signal type information is present in the video bitstream 110.

The video format 1120, such as the video_format element, can indicate the format of the video. The video full range flag 1122, such as the video_full_range_flag element, can indicate the black level and the range of the luma and chroma signals for the video content 108 encoded in the video bitstream 110.

The color description present flag 1124, such as the colour_description_present_flag element, can indicate the presence of color description information in the video bitstream 110. The color description present flag 1124 can have a value of 1 to indicate that additional color description information is included in the video bitstream 110. The color description present flag 1124 can have a value of 0 to indicate that no other color description information is included. The color description information can include the color primaries 1126, the transfer characteristics 1128, and the matrix coefficient 1130.

The color primaries 1126 can indicate the color scheme used in the video content 108. For example, the color primaries 1126, such as the colour_primaries element, can indicate the chromaticity coordinates of the source primaries.

The transfer characteristics 1128 can indicate the opto-electronic transfer characteristics of the video content 108. For example, the transfer characteristics 1128, such as the transfer_characteristics element, can be an enumerated value describing a predefined set of display characteristics.

The matrix coefficient 1130 can indicate coefficient used to derive luma and chroma signals from the red, green, and blue primaries indicated by the color primaries 1126. The matrix coefficient 1130, such as the matrix_coefficient element, can be matrix coefficient used to computationally transform a set of red, blue, and green color coordinates to luma and chroma equivalents.

The HRD VUI syntax 1102 can include chroma information for the video content 108. The HRD VUI syntax 1102 can include a chroma location information present flag 1132, a chroma top field sample 1134, a chroma bottom field sample 1136, and a neutral chroma flag 1138.

The chroma location information present flag 1132, such as the chroma_loc_info_present_flag element, can indicate whether additional chroma information is present in the video bitstream 110. The chroma location information present flag 1132 can have a value of 1 to indicate that additional chroma information is present or a value of 0 to indicate that no additional chroma information is present. The additional chroma information can include the chroma top field sample 1134 and the chroma bottom field sample 1136.

The chroma top field sample 1134, such as the chroma sample_loc_type_top_field element, can be an enumerated value to specify the location of chroma samples for the top field in the video bitstream 110. The chroma bottom field sample 1136, such as the chroma_sample_loc_type_bottom_field element, can be an enumerated value to specify the location of chroma samples for the bottom field in the video bitstream 110.

The neutral chroma flag 1138, such as the neutral_chroma_indication_flag element, can indicate whether the decoded chroma samples are equal to one. For example, if the neutral chroma flag 1138 has a value of 1, then all of the decoded chroma samples are set to 1. If the neutral chroma flag 1138 has a value of 0, then the decoded chroma samples are not limited to 1.

The HRD VUI syntax 1102 can include the field sequence flag 306, such as the field_seq_flag. The field sequence flag 306 can indicate whether coded video sequence information includes video representing fields.

The HRD VUI syntax 1102 can include the HRD parameters structure 318, such as the hrd_parameters element. The HRD parameters structure 318 includes the hypothetical reference decoder parameters for each sub-layer.

The HRD VUI syntax 1102 can include the bitstream restriction flag 328, such as the bitstream_restriction_flag. If the bitstream restriction flag 328 has a value of 1, then the HRD VUI syntax 1102 can include the tiles fixed structure flag 330, the motion vector flag 332, the max bytes per picture denomination 334, the maximum bits per minimum cu denomination 336, the maximum motion vector horizontal length 338, and the maximum motion vector vertical length 340.

The tiles fixed structure flag 330, such as a tiles_fixed_structure_flag element, can indicate that each picture in the coded video sequence has the same number of tiles. The motion vector flag 332, such as a motion_vector_over_pic_boundaries_flag element, can indicate that no sample outside the picture boundaries is used for prediction.

The max bytes per picture denomination 334, such as a max_bytes_per_pic_denom element, is a value indicating the maximum number of bytes for the sum of the sizes of the VCL NAL units associated with any coded picture in the coded video sequence. The maximum bits per minimum cu denomination 336, such as a max_bits_per_min_cu_denom element, is a value indicating the an upper bound for the number of coded bits of coding unit data for any coding block in any picture of the coded video sequence.

The maximum motion vector horizontal length 338, such as a log2_max_mv_length_horizontal element, indicates the maximum absolute value of a decoded horizontal motion vector component for all pictures in the video bitstream 110. The maximum motion vector vertical length 340, such as a log2_max_mv_length_vertical element, indicates the maximum absolute value of a decoded vertical motion vector component for all pictures in the video bitstream 110.

It has been discovered that using the HRD parameters structure 318 in the HRD VUI syntax 1102 provides improved performance by enabling finer grained control over the processing of the individual sub-layers instead of using common HRD parameters for all sub-layers. Using individual occurrences of the HRD parameters structure 318 can provide improved processing speed by taking advantage of individual differences between different sub-layers.

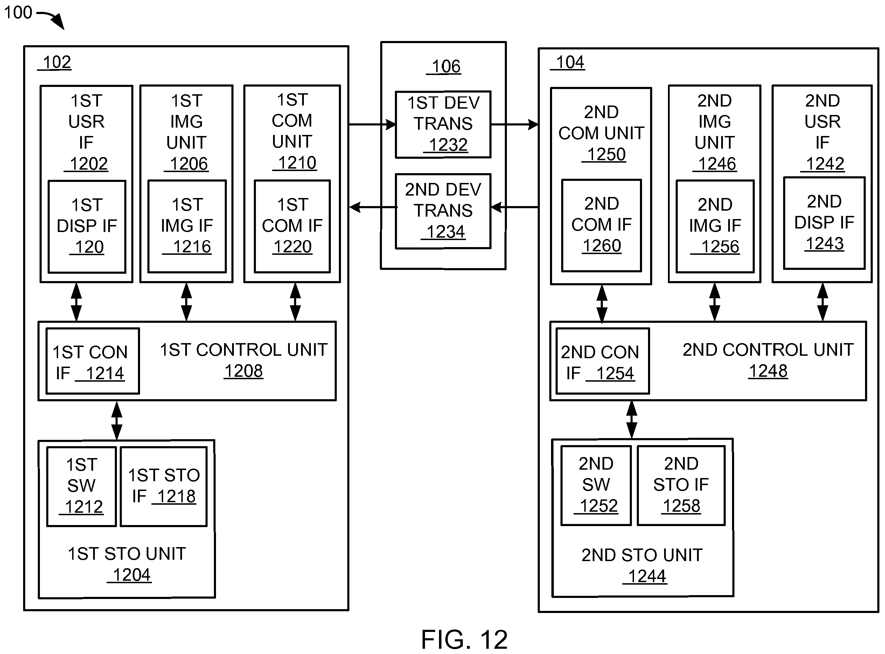

Referring now to FIG. 12, therein is shown a functional block diagram of the video coding system 100. The video coding system 100 can include the first device 102, the second device 104 and the communication path 106.

The first device 102 can communicate with the second device 104 over the communication path 106. The first device 102 can send information in a first device transmission 1232 over the communication path 106 to the second device 104. The second device 104 can send information in a second device transmission 1234 over the communication path 106 to the first device 102.

For illustrative purposes, the video coding system 100 is shown with the first device 102 as a client device, although it is understood that the video coding system 100 can have the first device 102 as a different type of device. For example, the first device can be a server. In a further example, the first device 102 can be the video encoder 102, the video decoder 104, or a combination thereof.

Also for illustrative purposes, the video coding system 100 is shown with the second device 104 as a server, although it is understood that the video coding system 100 can have the second device 104 as a different type of device. For example, the second device 104 can be a client device. In a further example, the second device 104 can be the video encoder 102, the video decoder 104, or a combination thereof.

For brevity of description in this embodiment of the present invention, the first device 102 will be described as a client device, such as a video camera, smart phone, or a combination thereof. The present invention is not limited to this selection for the type of devices. The selection is an example of the present invention.

The first device 102 can include a first control unit 1208. The first control unit 1208 can include a first control interface 1214. The first control unit 1208 can execute a first software 1212 to provide the intelligence of the video coding system 100.

The first control unit 1208 can be implemented in a number of different manners. For example, the first control unit 1208 can be a processor, an embedded processor, a microprocessor, a hardware control logic, a hardware finite state machine (FSM), a digital signal processor (DSP), or a combination thereof.

The first control interface 1214 can be used for communication between the first control unit 1208 and other functional units in the first device 102. The first control interface 1214 can also be used for communication that is external to the first device 102.

The first control interface 1214 can receive information from the other functional units or from external sources, or can transmit information to the other functional units or to external destinations. The external sources and the external destinations refer to sources and destinations external to the first device 102.

The first control interface 1214 can be implemented in different ways and can include different implementations depending on which functional units or external units are being interfaced with the first control interface 1214. For example, the first control interface 1214 can be implemented with electrical circuitry, microelectromechanical systems (MEMS), optical circuitry, wireless circuitry, wireline circuitry, or a combination thereof.

The first device 102 can include a first storage unit 1204. The first storage unit 1204 can store the first software 1212. The first storage unit 1204 can also store the relevant information, such as images, syntax information, video, maps, profiles, display preferences, sensor data, or any combination thereof.

The first storage unit 1204 can be a volatile memory, a nonvolatile memory, an internal memory, an external memory, or a combination thereof. For example, the first storage unit 1204 can be a nonvolatile storage such as non-volatile random access memory (NVRAM), Flash memory, disk storage, or a volatile storage such as static random access memory (SRAM).

The first storage unit 1204 can include a first storage interface 1218. The first storage interface 1218 can be used for communication between the first storage unit 1204 and other functional units in the first device 102. The first storage interface 1218 can also be used for communication that is external to the first device 102.

The first device 102 can include a first imaging unit 1206. The first imaging unit 1206 can capture the video content 108 of FIG. 1 from the real world. The first imaging unit 1206 can include a digital camera, an video camera, an optical sensor, or any combination thereof.

The first imaging unit 1206 can include a first imaging interface 1216. The first imaging interface 1216 can be used for communication between the first imaging unit 1206 and other functional units in the first device 102.

The first imaging interface 1216 can receive information from the other functional units or from external sources, or can transmit information to the other functional units or to external destinations. The external sources and the external destinations refer to sources and destinations external to the first device 102.

The first imaging interface 1216 can include different implementations depending on which functional units or external units are being interfaced with the first imaging unit 1206. The first imaging interface 1216 can be implemented with technologies and techniques similar to the implementation of the first control interface 1214.

The first storage interface 1218 can receive information from the other functional units or from external sources, or can transmit information to the other functional units or to external destinations. The external sources and the external destinations refer to sources and destinations external to the first device 102.

The first storage interface 1218 can include different implementations depending on which functional units or external units are being interfaced with the first storage unit 1204. The first storage interface 1218 can be implemented with technologies and techniques similar to the implementation of the first control interface 1214.

The first device 102 can include a first communication unit 1210. The first communication unit 1210 can be for enabling external communication to and from the first device 102. For example, the first communication unit 1210 can permit the first device 102 to communicate with the second device 104, an attachment, such as a peripheral device or a computer desktop, and the communication path 106.

The first communication unit 1210 can also function as a communication hub allowing the first device 102 to function as part of the communication path 106 and not limited to be an end point or terminal unit to the communication path 106. The first communication unit 1210 can include active and passive components, such as microelectronics or an antenna, for interaction with the communication path 106.

The first communication unit 1210 can include a first communication interface 1220. The first communication interface 1220 can be used for communication between the first communication unit 1210 and other functional units in the first device 102. The first communication interface 1220 can receive information from the other functional units or can transmit information to the other functional units.

The first communication interface 1220 can include different implementations depending on which functional units are being interfaced with the first communication unit 1210. The first communication interface 1220 can be implemented with technologies and techniques similar to the implementation of the first control interface 1214.

The first device 102 can include a first user interface 1202. The first user interface 1202 allows a user (not shown) to interface and interact with the first device 102. The first user interface 1202 can include a first user input (not shown). The first user input can include touch screen, gestures, motion detection, buttons, sliders, knobs, virtual buttons, voice recognition controls, or any combination thereof.

The first user interface 1202 can include the first display interface 120. The first display interface 120 can allow the user to interact with the first user interface 1202. The first display interface 120 can include a display, a video screen, a speaker, or any combination thereof.

The first control unit 1208 can operate with the first user interface 1202 to display video information generated by the video coding system 100 on the first display interface 120. The first control unit 1208 can also execute the first software 1212 for the other functions of the video coding system 100, including receiving video information from the first storage unit 1204 for display on the first display interface 120. The first control unit 1208 can further execute the first software 1212 for interaction with the communication path 106 via the first communication unit 1210.

For illustrative purposes, the first device 102 can be partitioned having the first user interface 1202, the first storage unit 1204, the first control unit 1208, and the first communication unit 1210, although it is understood that the first device 102 can have a different partition. For example, the first software 1212 can be partitioned differently such that some or all of its function can be in the first control unit 1208 and the first communication unit 1210. Also, the first device 102 can include other functional units not shown in FIG. 12 for clarity.

The video coding system 100 can include the second device 104. The second device 104 can be optimized for implementing the present invention in a multiple device embodiment with the first device 102. The second device 104 can provide the additional or higher performance processing power compared to the first device 102.

The second device 104 can include a second control unit 1248. The second control unit 1248 can include a second control interface 1254. The second control unit 1248 can execute a second software 1252 to provide the intelligence of the video coding system 100.

The second control unit 1248 can be implemented in a number of different manners. For example, the second control unit 1248 can be a processor, an embedded processor, a microprocessor, a hardware control logic, a hardware finite state machine (FSM), a digital signal processor (DSP), or a combination thereof.

The second control interface 1254 can be used for communication between the second control unit 1248 and other functional units in the second device 104. The second control interface 1254 can also be used for communication that is external to the second device 104.

The second control interface 1254 can receive information from the other functional units or from external sources, or can transmit information to the other functional units or to external destinations. The external sources and the external destinations refer to sources and destinations external to the second device 104.

The second control interface 1254 can be implemented in different ways and can include different implementations depending on which functional units or external units are being interfaced with the second control interface 1254. For example, the second control interface 1254 can be implemented with electrical circuitry, microelectromechanical systems (MEMS), optical circuitry, wireless circuitry, wireline circuitry, or a combination thereof.

The second device 104 can include a second storage unit 1244. The second storage unit 1244 can store the second software 1252. The second storage unit 1244 can also store the relevant information, such as images, syntax information, video, maps, profiles, display preferences, sensor data, or any combination thereof.

The second storage unit 1244 can be a volatile memory, a nonvolatile memory, an internal memory, an external memory, or a combination thereof. For example, the second storage unit 1244 can be a nonvolatile storage such as non-volatile random access memory (NVRAM), Flash memory, disk storage, or a volatile storage such as static random access memory (SRAM).

The second storage unit 1244 can include a second storage interface 1258. The second storage interface 1258 can be used for communication between the second storage unit 1244 and other functional units in the second device 104. The second storage interface 1258 can also be used for communication that is external to the second device 104.

The second storage interface 1258 can receive information from the other functional units or from external sources, or can transmit information to the other functional units or to external destinations. The external sources and the external destinations refer to sources and destinations external to the second device 104.

The second storage interface 1258 can include different implementations depending on which functional units or external units are being interfaced with the second storage unit 1244. The second storage interface 1258 can be implemented with technologies and techniques similar to the implementation of the second control interface 1254.

The second device 104 can include a second imaging unit 1246. The second imaging unit 1246 can capture the video content 108 of FIG. 1 from the real world. The first imaging unit 1206 can include a digital camera, an video camera, an optical sensor, or any combination thereof.

The second imaging unit 1246 can include a second imaging interface 1256. The second imaging interface 1256 can be used for communication between the second imaging unit 1246 and other functional units in the second device 104.

The second imaging interface 1256 can receive information from the other functional units or from external sources, or can transmit information to the other functional units or to external destinations. The external sources and the external destinations refer to sources and destinations external to the second device 104.

The second imaging interface 1256 can include different implementations depending on which functional units or external units are being interfaced with the second imaging unit 1246. The second imaging interface 1256 can be implemented with technologies and techniques similar to the implementation of the first control interface 1214.

The second device 104 can include a second communication unit 1250. The second communication unit 1250 can enable external communication to and from the second device 104. For example, the second communication unit 1250 can permit the second device 104 to communicate with the first device 102, an attachment, such as a peripheral device or a computer desktop, and the communication path 106.

The second communication unit 1250 can also function as a communication hub allowing the second device 104 to function as part of the communication path 106 and not limited to be an end point or terminal unit to the communication path 106. The second communication unit 1250 can include active and passive components, such as microelectronics or an antenna, for interaction with the communication path 106.

The second communication unit 1250 can include a second communication interface 1260. The second communication interface 1260 can be used for communication between the second communication unit 1250 and other functional units in the second device 104. The second communication interface 1260 can receive information from the other functional units or can transmit information to the other functional units.

The second communication interface 1260 can include different implementations depending on which functional units are being interfaced with the second communication unit 1250. The second communication interface 1260 can be implemented with technologies and techniques similar to the implementation of the second control interface 1254.

The second device 104 can include a second user interface 1242. The second user interface 1242 allows a user (not shown) to interface and interact with the second device 104. The second user interface 1242 can include a second user input (not shown). The second user input can include touch screen, gestures, motion detection, buttons, sliders, knobs, virtual buttons, voice recognition controls, or any combination thereof.

The second user interface 1242 can include a second display interface 1243. The second display interface 1243 can allow the user to interact with the second user interface 1242. The second display interface 1243 can include a display, a video screen, a speaker, or any combination thereof.

The second control unit 1248 can operate with the second user interface 1242 to display information generated by the video coding system 100 on the second display interface 1243. The second control unit 1248 can also execute the second software 1252 for the other functions of the video coding system 100, including receiving display information from the second storage unit 1244 for display on the second display interface 1243. The second control unit 1248 can further execute the second software 1252 for interaction with the communication path 106 via the second communication unit 1250.

For illustrative purposes, the second device 104 can be partitioned having the second user interface 1242, the second storage unit 1244, the second control unit 1248, and the second communication unit 1250, although it is understood that the second device 104 can have a different partition. For example, the second software 1252 can be partitioned differently such that some or all of its function can be in the second control unit 1248 and the second communication unit 1250. Also, the second device 104 can include other functional units not shown in FIG. 12 for clarity.

The first communication unit 1210 can couple with the communication path 106 to send information to the second device 104 in the first device transmission 1232. The second device 104 can receive information in the second communication unit 1250 from the first device transmission 1232 of the communication path 106.

The second communication unit 1250 can couple with the communication path 106 to send video information to the first device 102 in the second device transmission 1234. The first device 102 can receive video information in the first communication unit 1210 from the second device transmission 1234 of the communication path 106. The video coding system 100 can be executed by the first control unit 1208, the second control unit 1248, or a combination thereof.

The functional units in the first device 102 can work individually and independently of the other functional units. For illustrative purposes, the video coding system 100 is described by operation of the first device 102. It is understood that the first device 102 can operate any of the modules and functions of the video coding system 100. For example, the first device 102 can be described to operate the first control unit 1208.

The functional units in the second device 104 can work individually and independently of the other functional units. For illustrative purposes, the video coding system 100 can be described by operation of the second device 104. It is understood that the second device 104 can operate any of the modules and functions of the video coding system 100. For example, the second device 104 is described to operate the second control unit 1248.

For illustrative purposes, the video coding system 100 is described by operation of the first device 102 and the second device 104. It is understood that the first device 102 and the second device 104 can operate any of the modules and functions of the video coding system 100. For example, the first device 102 is described to operate the first control unit 1208, although it is understood that the second device 104 can also operate the first control unit 1208.

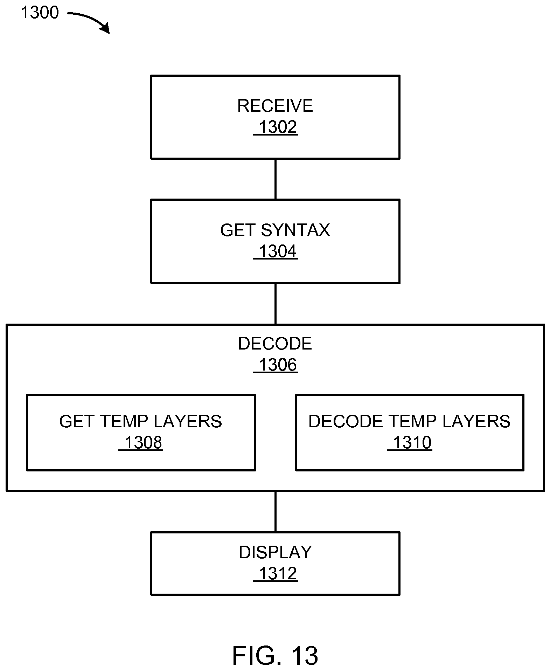

Referring now to FIG. 13, therein is shown a control flow 1300 of the video coding system 100 of FIG. 1. The control flow 1300 describes decoding the video bitstream 110 of FIG. 1 by receiving the video bitstream 110, extracting the video syntax 114 of FIG. 1, decoding the video bitstream 110, and displaying the video stream 112 of FIG. 1.

The video coding system 100 can include a receive module 1302. The receive module 1302 can receive the video bitstream 110 encoded by the video encoder 102 of FIG. 1.

The video bitstream 110 can be received in a variety of ways. For example, the video bitstream 110 can be received from the video encoder 102 of FIG. 1 as a streaming serial bitstream, a pre-encoded video file (not shown), in a digital message (not shown) over the communication path 106 of FIG. 1, or a combination thereof.

The video bitstream 110 can include one or more the temporal layers 230 of FIG. 2 for representing the video content 108 of FIG. 1 at different frame rates. The receive module 1302 can selectively filter the temporal layers 230 to reduce the size of the video bitstream 110.

For example, the receive module 1302 can receive the video bitstream 110 having the temporal layers 230 for three different frame rates, such as 60 fps, 30 fps, and 15 fps. The receive module 1302 can filter the video bitstream 110 to remove the 60 fps and the 30 fps occurrences of the temporal layers 230 and only process the 15 fps occurrence of the temporal layers 230.

The video coding system 100 can include a get syntax module 1304. The get syntax module 1304 can identify and extract the video syntax 114 of the video bitstream 110.

The get syntax module 1304 can include a get temporal layers module 1308 and a decode temporal layers module 1310.

The get syntax module 1304 can extract the video syntax 114 for the video bitstream 110 in a variety of ways. For example, the get syntax module 1304 can extract the video syntax 114 by searching the video bitstream 110 for video usability information headers indicating the presence of the video syntax 114. In another example, the video syntax 114 can be extracted from the video bitstream 110 using a demultiplexer (not shown) to separate the video syntax 114 from the video image data of the video bitstream 110.

In yet another example, the video syntax 114 can be extracted from the video bitstream 110 by extracting a sequence parameter set Raw Byte Sequence Payload (RBSP) syntax. The sequence parameter set RBSP is a syntax structure containing a integer number of bytes encapsulated in a network abstraction layer unit. The RBSP can be either empty or have the form of a string of data bits containing syntax elements followed by a RBSP stop bit and followed by zero or more addition bits equal to 0.

The video syntax 114 can be extracted from the serial bitstream in a timewise manner by extracting individual elements as the elements are available in time order in the video bitstream 110. The video coding system 100 can selectively extract and process later elements based on the values of the earlier extracted elements. For example, the get syntax module 1304 can process the HRD parameters structure 318 of FIG. 3 based on the previously received value of the low delay flag 322 of FIG. 3.

In another example, if the video bitstream 110 is received in a file, then the video syntax 114 can be detected by examining the file extension of the file containing the video bitstream 110. In yet another example, if the video bitstream 110 is received as a digital message over the communication path 106 of FIG. 1, then the video syntax 114 can be provided as a portion of the structure of the digital message.

It has been discovered that the get syntax module 1304 can increase performance by dynamically decoding the video bitstream 110 using the HRD parameters structure 318 based on previously extracted occurrences of the low delay flag 322. For example, receiving the low delay flag 322 increases decoding performance by changing the level of delay allowed in the CPB when applying the HRD parameters structure 318.

The get syntax module 1304 can extract the individual elements of the video syntax 114 based on the syntax type 202 of FIG. 2. The syntax type 202 can include AVC video, SVC video, MVC video, MVD video, SSV video, or a combination thereof.

The get syntax module 1304 can extract the video syntax 114 having video usability information. The video syntax 114 can include the HEVC VUI scalable extension syntax 302 of FIG. 3, the HEVC VUI first extension syntax 702 of FIG. 7, the HEVC VUI second extension syntax 802 of FIG. 8, the HRD VUI syntax 1102 of FIG. 11, or a combination thereof.

The get syntax module 1304 can extract the video syntax 114 having hypothetical reference decoder information. The video syntax 114 can include the HRD base syntax 902 of FIG. 12, the HRD syntax 402 of FIG. 4, the HRD fixed syntax 502 of FIG. 5, the HRD variable syntax 602 of FIG. 6, the HRD sub-layer syntax 1002 of FIG. 10, or a combination thereof. The get syntax module 1304 can extract the video syntax 114 representing the hrd_parameters_fixed_nal element and the hrd_parameters_fixed_vcl element.

The video syntax 114 can have a variety of configurations. For example, the HEVC VUI scalable extension syntax 302 can include one occurrence of the HRD syntax 402 for all occurrences of the temporal layers 230.

The HRD syntax 402 can include single occurrences of the CPB count 408 of FIG. 4, the bit rate scale 410 of FIG. 4, the CPB size scale 412 FIG. 4, the initial CPB removal delay length 422 of FIG. 4, the CPB removal delay length 424 of FIG. 4, the DPB output delay length 426 of FIG. 4, and the time offset length 428 of FIG. 4. The HRD syntax 402 can include a loop structure with multiple occurrences of the bit rate value 416 of FIG. 4, the CPB size value 418 of FIG. 4, and the CBR flag 420 of FIG. 4 for each coded picture buffer as indicated by the CPB count 408.

In another example, the get syntax module 1304 can extract the video syntax 114, such as the HEVC VUI first extension syntax 702, from the video bitstream 110. The HEVC VUI first extension syntax 702 can include an single occurrence of the HRD fixed syntax 502. The HRD fixed syntax 502 can include single occurrences of the bit rate scale 410, the CPB size scale 412, the initial CPB removal delay length 422, the CPB removal delay length 424, the DPB output delay length 426, and the time offset length 428.

The HEVC VUI first extension syntax 702 can include an occurrence of the HRD variable syntax 602 for each individual occurrence of the temporal layers 230. The HRD variable syntax 602 can include a single occurrence of the CPB count 408 to indicate the total number of coded picture buffers. The HRD variable syntax 602 include a loop structure with multiple occurrences of the bit rate value 416, the CPB size value 418, and the CBR flag 420 for each coded picture buffer as indicated by the CPB count 408.

In yet another example, the get syntax module 1304 can extract the video syntax 114, such as the HEVC VUI second extension syntax 802, from the video bitstream 110. The HEVC VUI second extension syntax 802 can include a single occurrence of the HRD NAL fixed parameters structure 806 of FIG. 8 and the HRD VCL fixed parameters structure 808 of FIG. 8.

The HEVC VUI second extension syntax 802 can include an occurrence of the HRD variable syntax 602 for each individual occurrence of the temporal layers 230. The HRD variable syntax 602 can include a single occurrence of the CPB count 408 to indicate the total number of coded picture buffers. The HRD variable syntax 602 include a loop structure with multiple occurrences of the bit rate value 416, the CPB size value 418, and the CBR flag 420 for each coded picture buffer as indicated by the CPB count 408.

In an illustrative example, the get syntax module 1304 can extract the HRD fixed syntax 502 from the video bitstream 110 by parsing the video syntax 114. In another illustrative example, extracting the HRD fixed syntax 502 can include extracting the HRD NAL fixed parameters structure 806 and the HRD VCL fixed parameters structure 808.

The video coding system 100 can include a decode module 1306. The decode module 1306 can decode the video bitstream 110 using the video syntax 114 to form the video stream 112. The decode module 1306 can include a get temporal layers module 1308 and a decode temporal layers module 1310.

The decode module 1306 can decode the video bitstream 110 using the video syntax 114 such as the HEVC VUI scalable extension syntax 302, the HEVC VUI first extension syntax 702, the HEVC VUI second extension syntax 802, the HRD VUI syntax 1102, or a combination thereof. The decode module 1306 can identify and extract the temporal layers 230 using the HRD syntax 402, the HRD fixed syntax 502, the HRD variable syntax 602, the HRD base syntax 902, the HRD sub-layer syntax 1002, or a combination thereof.

The get temporal layers module 1308 can identify the temporal layers 230 to extract from the video bitstream 110 to form the video stream 112. The get temporal layers module 1308 can identify the temporal layers 230 in a variety of ways.

For example, the get temporal layers module 1308 can identify the temporal layers 230 by extracting the temporal layer count 304 of FIG. 3 from the video syntax 114, such as HEVC VUI first extension syntax 702 or the HEVC VUI second extension syntax 802. The temporal layer count 304 indicates the total number of temporal layers 230 in the video bitstream 110.

The get temporal layers module 1308 can extract the temporal layers 230 from the video bitstream 110 using the video syntax 114. The video syntax 114 can include the fixed and variable hypothetical reference decoder parameters structures, such as the HRD fixed parameters structure 706 of FIG. 7, the HRD NAL fixed parameters structure 806, the HRD VCL fixed parameters structure 808, and the HRD variable parameters structure 708 of FIG. 7.

The get temporal layers module 1308 can extract the temporal layers 230 by parsing the data in the video bitstream 110 based on the video syntax 114. The video syntax 114 can define the number and configuration of the temporal layers 230.

For example, the get temporal layers module 1308 can use the temporal layer count 304 to determine the total number of the temporal layers 230 to extract from the video bitstream 110. The video format 1120 of FIG. 11 can be extracted from the video bitstream 110 to determine the type of video system of the video content 108.

In another example, the CPB count 408 can be used to determine the number of coded picture buffers to be used to extract the temporal layers 230. The bit rate scale 410 can be used to determine the maximum input bit rate for the coded picture buffers. The CPB size scale 412 can be used to determine the size of the coded picture buffers. For each of the coded picture buffers, the bit rate value 416 and the CPB size value 418.

In an illustrative example, the get temporal layers module 1308 can extract the first occurrence 232 of FIG. 2 and the second occurrence 234 of FIG. 2 of the temporal layers 230 from the video bitstream 110 based on the HRD fixed syntax 502 and the HRD variable syntax 602. The HRD fixed syntax 502 is common for all of the temporal layers 230. The HRD variable syntax 602 includes a separate occurrence for each of the temporal layers 230.

The first occurrence 232 of the temporal layers 230 can be extracted using a first occurrence of the HRD variable syntax 602. The second occurrence 234 of the temporal layers 230 can be extracted using a second occurrence of the HRD variable syntax 602.

The decode temporal layers module 1310 can receive the temporal layers 230 from the get temporal layers module 1308 and decode the temporal layers 230 to form the video stream 112. The decode temporal layers module 1310 can decode the temporal layers 230 in a variety of ways.

For example, the decode temporal layers module 1310 can decode the temporal layers 230 using the HRD base syntax 902. In another example, the decode temporal layers module 1310 can decode the temporal layers 230 using the HRD sub-layer syntax 1002. The decode temporal layers module 1310 can decode the temporal layers 230 and select one of the temporal layers 230 to form the video stream 112.

The video coding system 100 can include a display module 1312. The display module 1312 can receive the video stream 112 from the decode module 1306 and display on the display interface 120 of FIG. 1. The video stream 112 can include one or more occurrences of the temporal layers 230

The physical transformation from the optical images of physical objects of the video content 108 to displaying the video stream 112 on the pixel elements of the display interface 120 of FIG. 1 results in physical changes to the pixel elements of the display interface 120 in the physical world, such as the change of electrical state the pixel element, is based on the operation of the video coding system 100. As the changes in the physical world occurs, such as the motion of the objects captured in the video content 108, the movement itself creates additional information, such as the updates to the video content 108, that are converted back into changes in the pixel elements of the display interface 120 for continued operation of the video coding system 100.

The first software 1212 of FIG. 12 of the first device 102 can include the video coding system 100. For example, the first software 1212 can include the receive module 1302, the get syntax module 1304, the decode module 1306, and the display module 1312.

The first control unit 1208 of FIG. 12 can execute the first software 1212 for the receive module 1302 to receive the video bitstream 110. The first control unit 1208 can execute the first software 1212 for the get syntax module 1304 to identify and extract the video syntax 114 from the video bitstream 110. The first control unit 1208 can execute the first software 1212 for the decode module 1306 to form the video stream 112. The first control unit 1208 can execute the first software 1212 for the display module 1312 to display the video stream 112.

The second software 1252 of FIG. 12 of the second device 104 of FIG. 1 can include the video coding system 100. For example, the second software 1252 can include the receive module 1302, the get syntax module 1304, and the decode module 1306.

The second control unit 1248 of FIG. 12 can execute the second software 1252 for the receive module 1302 to receive the video bitstream 110. The second control unit 1248 can execute the second software 1252 for the get syntax module 1304 to identify and extract the video syntax 114 from the video bitstream 110. The second control unit 1248 can execute the second software 1252 for the decode module 1306 to form the video stream 112 of FIG. 1. The second control unit 1248 can execute the second software for the display module 1312 to display the video stream 112.

The video coding system 100 can be partitioned between the first software 1212 and the second software 1252. For example, the second software 1252 can include the get syntax module 1304, the decode module 1306, and the display module 1312. The second control unit 1248 can execute modules partitioned on the second software 1252 as previously described.

In an illustrative example, the video coding system 100 can include the video encoder 102 on the first device 102 and the video decoder 104 on the second device 104. The video decoder 104 can include the display processor 118 of FIG. 1 and the display interface 120.

The first software 1212 can include the receive module 1302 and the get syntax module 1304. Depending on the size of the first storage unit 1204 of FIG. 12, the first software 1212 can include additional modules of the video coding system 100. The first control unit 1208 can execute the modules partitioned on the first software 1212 as previously described.

The first control unit 1208 can operate the first communication unit 1210 of FIG. 12 to send the video bitstream 110 to the second device 104. The first control unit 1208 can operate the first software 1212 to operate the first imaging unit 1206 of FIG. 12. The second communication unit 1250 of FIG. 12 can send the video stream 112 to the first device 102 over the communication path 106.

The video coding system 100 describes the module functions or order as an example. The modules can be partitioned differently. For example, the get syntax module 1304 and the decode module 1306 can be combined. Each of the modules can operate individually and independently of the other modules.

Furthermore, data generated in one module can be used by another module without being directly coupled to each other. For example, the decode module 1306 can receive the video bitstream 110 from the receive module 1302.

The modules can be implemented in a variety of ways. The receive module 1302, the get syntax module 1304, the decode module 1306, and the display module 1312 can be implemented in as hardware accelerators (not shown) within the first control unit 1208 or the second control unit 1248, or can be implemented in as hardware accelerators (not shown) in the first device 102 or the second device 104 outside of the first control unit 1208 or the second control unit 1248.

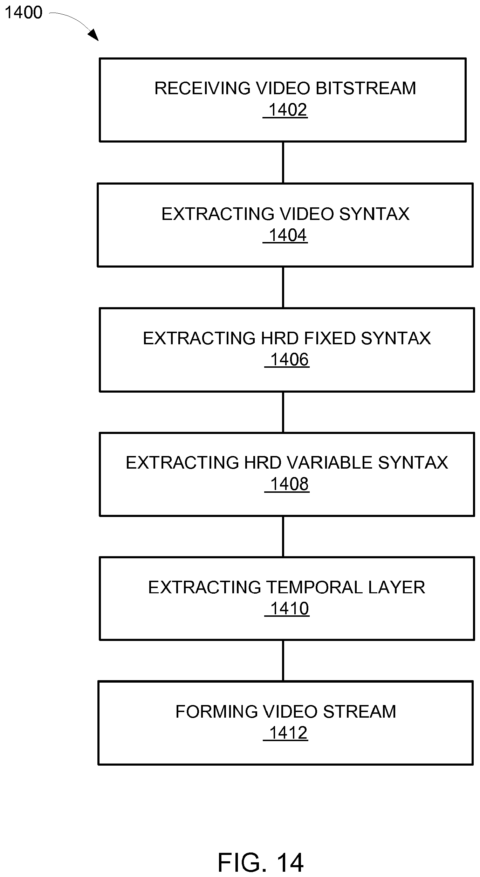

Referring now to FIG. 14, therein is shown a flow chart of a method 1400 of operation of the video coding system 100 of FIG. 1 in a further embodiment of the present invention. The method 1400 includes: receiving a video bitstream in a block 1402; extracting a video syntax from the video bitstream in a block 1404; extracting a hypothetical reference decoder (HRD) fixed syntax from the video syntax in a block 1406; extracting a HRD variable syntax from the video syntax in a block 1408; extracting a temporal layer from the video bitstream based on the HRD fixed syntax and the HRD variable syntax in a block 1410; and forming a video stream based on the temporal layer for displaying on a device in a block 1412.

It has been discovered that the present invention thus has numerous aspects. The present invention valuably supports and services the historical trend of reducing costs, simplifying systems, and increasing performance. These and other valuable aspects of the present invention consequently further the state of the technology to at least the next level.

Thus, it has been discovered that the video coding system of the present invention furnishes important and heretofore unknown and unavailable solutions, capabilities, and functional aspects for efficiently coding and decoding video content for high definition applications. The resulting processes and configurations are straightforward, cost-effective, uncomplicated, highly versatile and effective, can be surprisingly and unobviously implemented by adapting known technologies, and are thus readily suited for efficiently and economically manufacturing video coding devices fully compatible with conventional manufacturing processes and technologies. The resulting processes and configurations are straightforward, cost-effective, uncomplicated, highly versatile, accurate, sensitive, and effective, and can be implemented by adapting known components for ready, efficient, and economical manufacturing, application, and utilization.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

## Claims

1. A decoding method comprising:
extracting, as a video syntax (114) for a hypothetical reference decoder (HRD) from a video bitstream (108), a HRD fixed syntax (502) which includes fixed parameters associated with operation of the HRD that are constant for all of a plurality of sub-layers (232, 234, 236) of the video bitstream, and a HRD variable syntax (602) which includes variable parameters associated with operation of the HRD that vary for each of the plurality of sub-layers;
extracting a sub-layer from the video bitstream, where the sub-layer is identified by the parameters of the HRD fixed syntax and the HRD variable syntax; and
decoding the video stream from the extracted sub-layer using the HRD fixed syntax and the HRD variable syntax;
wherein the fixed parameters and the variable parameters each include parameters which specify a maximum input bit rate of a coded picture buffer (CPB) and/or a buffer size of the CPB;
the fixed parameters include a bit rate scale (410) and the variable parameters include a bit rate value minus 1 (416); and
the fixed parameters include a CPB size scale (412) and the variable parameters include a CPB size value minus 1 (418).

2. A decoding apparatus (104) comprising:
a get syntax module (1304) for extracting, as a video syntax (114) for a hypothetical reference decoder (HRD) from a video bitstream (108), a HRD fixed syntax (502) which includes fixed parameters associated with operation of the HRD that are constant for all of a plurality of sub-layers (232, 234, 236) of the video bitstream, and a HRD variable syntax (602) which includes variable parameters associated with operation of the HRD that vary for each of the plurality of sub-layers; and
a decode module (1306) for extracting a sub-layer from the video bitstream, where the sub-layer is identified by the parameters of the HRD fixed syntax and the HRD variable syntax, and for decoding the video stream from the extracted sub-layer using the HRD fixed syntax and the HRD variable syntax;
wherein the fixed parameters and the variable parameters each include parameters which specify a maximum input bit rate of a coded picture buffer (CPB) and/or a buffer size of the CPB;
the fixed parameters include a bit rate scale (410) and the variable parameters include a bit rate value minus 1 (416); and
the fixed parameters include a CPB size scale (412) and the variable parameters include a CPB size value minus 1 (418).

## Patentansprüche

1. Decodierverfahren, umfassend:
Extrahieren, als eine Videosyntax (114) für einen hypothetischen Referenzdecodierer (HRD) aus einem Videobitstrom (108), einer festen HRD-Syntax (502), die feste Parameter enthält, die einem Betrieb des HRD zugeordnet sind und die für Alle aus einer Vielzahl von Teilschichten (232, 234, 236) des Videobitstroms konstant sind, und einer variablen HRD-Syntax (602), die variable Parameter enthält, die dem Betrieb des HRD zugeordnet sind und die für Jede aus der Vielzahl von Teilschichten variiert;
Extrahieren einer Teilschicht aus dem Videobitstrom, wobei die Teilschicht durch die Parameter der festen HRD-Syntax und der variablen HRD-Syntax identifiziert wird; und
Decodieren des Videostroms aus der extrahierten Teilschicht mithilfe der festen HRD-Syntax und der variablen HRD-Syntax;
wobei die festen Parameter und die variablen Parameter jeweils Parameter enthalten, die eine maximale Eingangsbitrate eines codierten Bildpufferspeichers (Coded Picture Buffer, CPB) und/oder eine Pufferspeichergröße des CPB festlegen;
wobei die festen Parameter eine Bitratenskala (410) enthalten und wobei die variablen Parameter einen Bitratenwert minus 1 (416) enthalten; und
wobei die festen Parameter eine CPB-Größenskala (412) enthalten und wobei die variablen Parameter einen CPB-Größenwert minus 1 (418) enthalten.

2. Decodiervorrichtung (104), umfassend:
Syntaxbeschaffungsmodul (1304) zum Extrahieren, als eine Videosyntax (114) für einen hypothetischen Referenzdecodierer (HRD) aus einem Videobitstrom (108), einer festen HRD-Syntax (502), die feste Parameter enthält, die einem Betrieb des HRD zugeordnet sind und die für Alle aus einer Vielzahl von Teilschichten (232, 234, 236) des Videobitstroms konstant sind, und einer variablen HRD-Syntax (602), die variable Parameter enthält, die dem Betrieb des HRD zugeordnet sind und die für Jede aus der Vielzahl von Teilschichten variiert; und
ein Decodiermodul (1306) zum Extrahieren einer Teilschicht aus dem Videobitstrom, wobei die Teilschicht durch die Parameter der festen HRD-Syntax und der variablen HRD-Syntax identifiziert wird, und zum Decodieren des Videostroms aus der extrahierten Teilschicht mithilfe der festen HRD-Syntax und der variablen HRD-Syntax;
wobei die festen Parameter und die variablen Parameter jeweils Parameter enthalten, die eine maximale Eingangsbitrate eines codierten Bildpufferspeichers (Coded Picture Buffer, CPB) und/oder eine Pufferspeichergröße des CPB festlegen;
wobei die festen Parameter eine Bitratenskala (410) enthalten und wobei die variablen Parameter einen Bitratenwert minus 1 (416) enthalten; und
wobei die festen Parameter eine CPB-Größenskala (412) enthalten und wobei die variablen Parameter einen CPB-Größenwert minus 1 (418) enthalten.

## Revendications

1. Procédé de décodage comprenant :
l'extraction, en tant que syntaxe vidéo (114) pour un décodeur de référence hypothétique (HRD) à partir d'un train de bits vidéo (108), d'une syntaxe fixe HRD (502) qui comprend des paramètres fixes associés au fonctionnement du HRD qui sont constants pour l'ensemble d'une pluralité de sous-couches (232, 234, 236) du train de bits vidéo, et d'une syntaxe variable HRD (602) qui comprend des paramètres variables associés au fonctionnement du HRD qui varient pour chacune de la pluralité de sous-couches ;
l'extraction d'une sous-couche du train de bits vidéo, la sous-couche étant identifiée par les paramètres de la syntaxe fixe HRD et de la syntaxe variable HRD ; et
le décodage du flux vidéo de la sous-couche extraite en utilisant la syntaxe fixe HRD et la syntaxe variable HRD ;
les paramètres fixes et les paramètres variables comprenant chacun des paramètres qui spécifient un débit binaire d'entrée maximal d'un tampon d'image codée (CPB) et/ou une taille de tampon du CPB ;
les paramètres fixes comprenant une échelle de débit binaire (410) et les paramètres variables comprenant une valeur de débit binaire moins 1 (416) ; et
les paramètres fixes comprenant une échelle de taille de CPB (412) et les paramètres variables comprenant une valeur de taille de CPB moins 1 (418).

2. Appareil de décodage (104) comprenant :
un module de syntaxe d'obtention (1304) pour extraire, en tant que syntaxe vidéo (114) pour un décodeur de référence hypothétique (HRD) à partir d'un train de bits vidéo (108), une syntaxe fixe HRD (502) qui comprend des paramètres fixes associés au fonctionnement du HRD qui sont constants pour l'ensemble d'une pluralité de sous-couches (232, 234, 236) du train de bits vidéo, et une syntaxe variable HRD (602) qui comprend des paramètres variables associés au fonctionnement du HRD qui varient pour chacune de la pluralité de sous-couches ; et
un module de décodage (1306) pour extraire une sous-couche du train de bits vidéo, la sous-couche étant identifiée par les paramètres de la syntaxe fixe HRD et de la syntaxe variable HRD, et pour décoder le flux vidéo à partir de la sous-couche extraite en utilisant la syntaxe fixe HRD et la syntaxe variable HRD ;
les paramètres fixes et les paramètres variables comprenant chacun des paramètres qui spécifient un débit binaire d'entrée maximal d'un tampon d'image codée (CPB) et/ou une taille de tampon du CPB ;
les paramètres fixes comprenant une échelle de débit binaire (410) et les paramètres variables comprenant une valeur de débit binaire moins 1 (416) ; et
les paramètres fixes comprenant une échelle de taille de CPB (412) et les paramètres variables comprenant une valeur de taille de CPB moins 1 (418).
